# EUROPEAN PATENT SPECIFICATION

(11) **EP 2 936 143 B1**
(45) Date of publication and mention of the grant of the patent: **03.10.2018**
(21) Application number: 13811742.9
(22) Date of filing: 10.12.2013
(51) Int. Cl.: G01N 30/88, B01D 15/18, G01N 33/28

(54) **PREPARATORY HIGH PERFORMANCE LIQUID CHROMATOGRAPHIC (HPLC) SEPARATION SYSTEM AND TECHNIQUE FOR QUANTITATIVE FRACTIONATION OF TOTAL VACUUM RESID**
VORBEREITENDES HPLC-TRENNSYSTEM UND VERFAHREN ZUR QUANTITATIVEN FRAKTIONIERUNG VON GESAMTVAKUUMRÜCKSTAND
SYSTÈME DE SÉPARATION PAR CHROMATOGRAPHIE LIQUIDE HAUTE PERFORMANCE (CLHP) PRÉPARATIVE ET TECHNIQUE DE FRACTIONNEMENT QUANTITATIF D'UN RÉSIDU TOTAL SOUS VIDE

(30) Priority: 18.12.2012 US 201213718064
(43) Date of publication of application: 28.10.2015
(73) Proprietor: ExxonMobil Research and Engineering Company, Annandale, NJ 08801-0900 (US)
(72) Inventor: CHAWLA, Birbal, Cherry Hill, NJ 08003 (US)
(74) Representative: ExxonMobil Chemical Europe Inc.
(86) International application number: PCT/US2013/073996
(87) International publication number: WO 2014/099460

(56) References cited:
- WO-A1-2010/114587
- US-A1- 2007 048 874
- US-A1- 2012 153 139
- ROGEL E ET AL: "Determination of asphaltenes in crude oil and petroleum products by the on column precipitation method", ENERGY & FUELS, AMERICAN CHEMICAL SOCIETY, WASHINGTON, DC, US, vol. 23, no. 9, 17 September 2009 (2009-09-17), pages 4515-4521, XP002658277, ISSN: 0887-0624, DOI: DOI:10.1021/EF900358Q [retrieved on 2009-08-14]
- WALTER E. RUDZINSKI ET AL: "A Review on Extraction and Identification of Crude Oil and Related Products Using Supercritical Fluid Technology", ENERGY & FUELS, vol. 14, no. 2, 1 March 2000 (2000-03-01), pages 464-475, XP055101564, ISSN: 0887-0624, DOI: 10.1021/ef990177i

## Description

### FIELD

The disclosed subject matter relates to a method and system for analyzing hydrocarbon containing oils. In particular, the disclosed subject matter relates to a method and system for conducting chromatographic analysis of a total vacuum resid to provide quantification of eight classes of compounds (i.e., asphaltenes, saturates, 1-4+ ring aromatics, sulfides, and polars) contained within the total vacuum resid without prior de-asphalting. The disclosed subject matter also relates to a method and system for conducting chromatographic analysis of a total atmospheric resid to provide quantification of eight classes of compounds (i.e., asphaltenes, saturates, 1-4+ ring aromatics, sulfides, and polars) contained within the total atmospheric resid without prior fractionation and de-asphalting The disclosed subject matter also relates to a method and system for conducting chromatographic analysis of a vaccum gas oils and de-asphalted oils to provide quantification of seven classes of compounds (i.e., saturates, 1-4+ ring aromatics, sulfides, and polars). The disclosed subject matter also relates to a method and system for conducting chromatographic analysis of a resid to identify the presence of and provide quantification of asphaltenes.

### BACKGROUND

Compositional analysis of heavy crude oils is essential to improve efficiency of refinery operations. The compositional analysis helps identify specific refineries that can process specific grades or classes of crude oil. The compositional analysis will also help identify what product slates are capable of being produced from a specific crude oil and what processing is required to create the product slate. These heavy crude oils are often too complex to be analyzed for detailed compositional information using most current analytical techniques/instruments. It is, therefore, essential to fractionate them into sub-groups of different classes of compounds so that the detail/extensive molecular compositional analyses can be performed using characterizing tools, e.g. high resolution mass spectroscopy.

Preparative liquid chromatography (LC) has been used very extensively to fractionate heavy streams in terms of mainly three classes of compounds: saturates, aromatics, and polars. Saturates include of n-paraffins, iso-paraffins, and naphthenes. Aromatics include aromatic-hydrocarbons, aromatic-thiophenes, and some sulfides. Polars include heteroatom containing complex organic compounds. Additionally, aromatics are further fractionated, using preparative liquid chromatography, mostly into four classes of aromatic compounds based upon number of aromatic rings such as one-, two-, three-, and four+ rings. Although these preparative liquid chromatographic approaches provide relatively pure fractions and the weight percent data, the LC separations are very laborious and time consuming and hence costly. These separations are not environmental friendly because they use large volume of organic solvents which must be evaporated in order to get pure fractions.

In the petroleum industry, the heavy petroleum streams (boiling above 550 degrees F) are most often fractionated by two or more liqud chromatographic techniqes in order to obtain detail compositional information. The accurate detail compositional information is essential in order to process the heavy sreams (e.g. vacuum gas oil stream, etc.) into more profitable commodities, e.g. naphtha, diesel, etc. Additionally, detail characterization of heavy petroleum streams is required for developing new processing capabilities.

High Definition Hydrocarbon Analysis (HDHA) liquid chromotagraphic protocols for fractionating vacuum gas oils were developed about two decades ago and have been upgraded from time-to-time. Over the years, improvements have been made, such as the replacement of an open-glass-columns LC separation (i.e., silica gel separation) with reusable stainless steel columns. The open-column LC was replaced with an automated high performance liquid chromatography (HPLC) protocol. The HDHA laboratory prepared silver nitrate loaded non-reusable column was replaced with a reusable silver-ion column to retain sulfides and to achieve a base-line separation between saturates and one ring aromatics. The existing two high performance liquid chromatography (HPLC) separation techniques used for fractionation of vacuum gas oils are very time consuming and slow in providing HDHA data. One of the HPLC techniques, the Aromatic Ring Class (ARC) technique was developed about 20 years ago is operated at -40 °C and is hard to maintain. Another HPLC technique, the Silica Gel Separation (SGS) technique was developed about 10 years ago and is based upon packed HPLC columns. These two techniques use about 10-15 times more solvent volume (11.5 L Vs 0.70 L per sample) compared to the presently disclosed subject matter and takes about 20-25 hrs to complete one sample separation.

Most of these LC separations are performed at preparative scale so that enough of each of the separated fractions is obtained to perform other analyses. These separations are very cumbersome and mostly use silica gel or alumina as the stationary phase. The functionalized-silica-gel solid phases with amino- and/or cyano- groups have also been used. However, these separations provide some limited information on selected classes, namely saturates, aromatics, polars, and sub-fractions of aromatics.

Although the HDHA protocols were automated, these protocols were very time consuming. Commonly assigned US Patent No. 8,114,678 to Chawla et al discloses an automated analytical HPLC method for rapid quantitative determination of seven classes of compounds present in heavy petroleum streams boiling between 550°F and 1050°F that offers a significant improvement over the existing protocols. The seven classes of compounds are: saturates, aromatic-ring-classes 1-4, sulfides, and polars. The protocol disclosed by Chawla et al is referred to as STAR-7 (Synthesis TARget of 7 classes of compounds). The disclosure of US Patent No. 8,114,678 is incorporated herein in its entirety by reference. Type of analysis relates to the compositional analysis of both refinery and research samples. The synthesis in STAR-7 protocol refers to a data reconciliation procedure in which a detailed model-of-composition is adjusted to match analytical test results referred to as targets. The STAR-7 protocol provides seven analytical test results that are used in the reconciliation process. The STAR-7 protocol may be employed as part of the analytical protocol used in developing a model of composition for a hydrocarbon sample. Furthermore, the STAR-7 protocol can provide targets to which a reference model-of-composition is reconciled in estimating a model-of-composition for a sample under test. The analytical STAR-7 separation protocol utilizes two reusable columns and an HPLC system. The STAR-7 separation protocol and system offers an improvement over existing protocols because it can be performed in significantly less time (i.e., several days vs. 8-10 hours) and weight percent data for all seven fractions is obtained based on the detector's calibration response. The STAR-7 separation protocol and system, however, is not suitable for use in analyzing total vacuum resids, which are heavy fractions that are typically high in sulfur and nitrogen without the prior processing of the resid to remove asphaltenes

US 2007/0048874 and Rogel E. et al., Determination of Asphaltenes in Crude Oil and Petroleum Products by the on Column Precipitation Method, in Energy Fuels 2009, 23, 4515-4521, disclose the on-column precipitation of asphaltenes into a low polarity solvent and their subsequent re-dissolution.

Presently, the fractionation of a resid sample requires, in addition to tedious asphaltene removal, a set of two time-consuming larger scale HPLC separations (SGS and ARC). There is a need for a separation system and protocol that provides quicker and relatively cheaper alternative to very time-consuming off-line removal of asphaltenes before the lengthy preparatory scale SGS and sub-ambient (-40°C) ARC HPLC separations. There is also a need for a separation system and protocol that uses significantly less solvent.

### SUMMARY

The presently disclosed subject matter is directed to a method of performing quantitative fractionation of a total vacuum resid sample according to claim 1. The method includes introducing the total vacuum resid sample in a separation system having a first separation column, a second separation column and a third separation column. The first separation column is an asphaltene determinator column. The second separation column is a DNAP column containing 2,4-dinitroanilino-propyl-silica gel. The third separation column contains a silver-ion-loaded-strong-cation-exchange-silica gel (Ag+SCX-). The method includes performing an asphaltenes precipitation process in the first separation column to precipitate asphaltenes from the total vacuum resid sample. The asphaltenes precipitation process includes passing a first solvent through the all three separation columns to precipitate asphaltenes from the sample in the first separation column. Once the asphaltenes is precipitated in the first column, the rest of the resid is transferred to the second column.

The method further includes performing a saturates fraction removal process in the second separation column to extract a saturates fraction from the sample. The saturates fraction removal process includes extracting the saturates fraction from the sample in the second and third separation columns using the same solvent. The saturates fraction removal process includes supplying the extracted saturates fraction to a detector. Supplying the extracted saturates fraction to the detector includes passing the extracted saturates fraction through the third separation column before entering the detector.

The method further includes performing an aromatic ring class fraction removal process in the second separation column and third separation column to extract at least one aromatic ring class fraction from the sample. The aromatic ring class fraction removal process includes transferring an aromatic ring class-1 fraction contained in the sample from the second separation column to the third separation column using the second solvent and extracting the aromatic ring class-1 fraction from the third separation column using a third solvent The extracted aromatic ring class-1 fraction is supplied to the detector. The aromatic ring class fraction removal process further includes transferring an aromatic ring class-2 fraction contained in the sample from the second separation column to the third separation column using a fourth solvent and extracting the aromatic ring class-2 fraction from the third separation column using a fifth solvent. The extracted aromatic ring class-2 fraction is supplied to the detector. The aromatic ring class fraction removal process further includes transferring an aromatic ring class-3 fraction contained in the sample from the second separation column to the third separation column using a sixth solvent, and extracting the aromatic ring class-3 fraction from the third separation column using a seventh solvent. The extracted aromatic ring class-3 fraction is supplied to a detector. The aromatic ring class fraction removal process further includes transferring an aromatic ring class-4+ fraction contained in the sample from the second separation column to the third separation column using a eighth solvent, and extracting the aromatic ring class-4+ fraction from the third separation column using a ninth solvent. The extracted aromatic ring class-4+ fraction is supplied to the detector.

The method further includes performing a sulfides fraction removal process in the third separation column to extract a sulfides fraction from the sample. The method also includes performing a polars fraction removal process in the second separation columns to extract a polars fraction from the sample. The method also includes performing an asphaltenes removal process in the first separation column to extract the precipitated asphaltenes from the sample. The second separation column and the third separation column are cleaned prior to performing the asphaltenes removal process. Following the removal of the asphaltenes, the separation system is cleaned and regenerated.

The presently disclosed subject matter is also directed to a separation system for performing quantitative fractionation of a total vacuum resid sample according to claim 12. The separation system includes a first separation column, a second separation column and a third separation column. The system further includes a solvent delivery unit for supplying a separation solvent to at least one of the first separation column, a second separation column and a third separation column. The system also includes a plurality of switching valves interconnecting the first separation column, the second separation column, the third separation column and the solvent delivery unit establishing a flow path there between. The selective operation of the plurality of switching valves modifies the flow path between the first separation column, the second separation column and the third separation column. The separation system has at least a first operating mode, a second operating mode and a third operating mode. In the first operating mode, the separation system separates a total vacuum resid sample into eight fractions. In the second operating mode, the separation system separates one of a heavy hydrocarbon sample (e.g. DAO or VGO) into seven fractions, whereas a resid is fractionated into asphaltenes and de-asphaltenated oil in the third operating mode.

In the first operating mode, each of the first separation column, the second separation column and the third separation column are selectively operated to separate the total vacuum reside into eight fractions. The eight fractions include asphaltenes, saturates fraction, at least one aromatic ring class fraction, sulfides fraction, and polars fraction. An asphaltenes precipitation process is performed in the first separation column to precipitate asphaltenes from the total vacuum resid sample. A saturates fraction removal process is performed in the second separation column and third separation column to extract a saturates fraction from the sample. An aromatic ring class fraction removal process is performed in the second separation column and third separation column to extract at least one aromatic ring class fraction from the sample. A sulfides fraction removal process is performed in the third separation column to extract a sulfides fraction from the sample. A polars fraction removal process is performed in the second separation columns to extract a polars fraction from the sample. An asphaltenes removal process is performed in the first separation column to extract the precipitated asphaltenes from the sample.

In the second operating mode, the separation system separates a hydrocarbon sample into seven fractions. In this operating mode, each of the second separation column and the third separation column are selectively operated to separate the hydrocarbon sample into seven fractions and the first separation column is bypassed. The seven fractions include saturates fraction, at least one aromatic ring class fraction, sulfides fraction, and polars fraction. A saturates fraction removal process is performed in the second separation column and third separation column to extract a saturates fraction from the sample. An aromatic ring class fraction removal process is performed in the second separation column and third separation column to extract at least one aromatic ring class fraction from the sample. A sulfides fraction removal process is performed in the third separation column to extract a sulfides fraction from the sample. A polars fraction removal process is performed in the second separation columns to extract a polars fraction from the sample.

In the third operating mode, the separation system separates a resid sample into asphaltenes and a de-asphalted oil. The first separation column is operated in the third operating mode and the second separation column and the third separation column are by-passed.

### BRIEF DESCRIPTION OF THE DRAWINGS

Figure 1 is a schematic diagram of the separation system in accordance with the presently disclosed subject matter in a first separation operating mode where a total vaccum resid is separated into eight fractions without prior de-asphalting.
Figure 2 is a schematic diagram of the separation system of Figure 1 in accordance with the presently disclosed subject matter in a second separation operating mode for separating vacuum gas oil and/or deasphalted oils into seven fractions.
Figure 3 is a schematic diagram of the separation system of Figure 1 in accordance with the presently disclosed subject matter in a third separation operating mode for separating asphaltenes from a resid sample for asphaltene determination.
Figure 4 is a schematic diagram of the separation system in accordance with the presently disclosed subject matter in a forward mode with no columns bypassed.
Figure 5 is a schematic diagram of the separation system in accordance with the presently disclosed subject matter in a forward mode having an asphaltene determinator column bypassed.
Figure 6 is a schematic diagram of the separation system in accordance with the presently disclosed subject matter in a forward mode having the asphaltene determinator column and DNAP column bypassed.
Figure 7 is a schematic diagram of the separation system in accordance with the presently disclosed subject matter in a sulfides backflushing mode having the asphaltene determinator column and DNAP column bypassed..
Figure 8 is a schematic diagram of the separation system in accordance with the presently disclosed subject matter in a polars backflushing mode having the asphaltene determinator column and the silver-loaded (third) column bypassed.
Figure 9 is a schematic diagram of the separation system in accordance with the presently disclosed subject matter in an asphaltene elution mode having the DNAP column and the silver-loaded column bypassed.
Figure 10 is a sample chromatogram illustrating the separation of the total vacuum resid sample into eight fraction in accordance with the presently disclosed subject matter.
Figure 11 is a sample chromatogram illustrating the separation of the total vacuum resid sample into asphaltenes and de-asphalted oil utilizing the system in the asphaltene determinator mode in accordance with the presently disclosed subject matter.
Figure 12 is an illustration of two sample chromatograms illustrating the separation of two different atmospheric resid samples into eight fractions in accordance with the presently disclosed subject matter.

### DETAILED DESCRIPTION

While the disclosed subject matter may be embodied in many different forms, reference will now be made in detail to specific embodiments of the disclosed subject, examples of which are illustrated in the accompanying drawings. This description is an exemplification of the principles of the disclosed subject and is not intended to limit the disclosed subject matter to the particular embodiments illustrated.

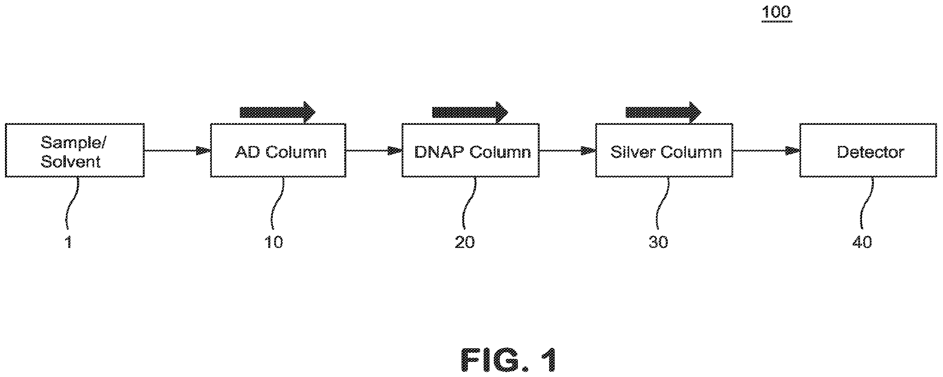

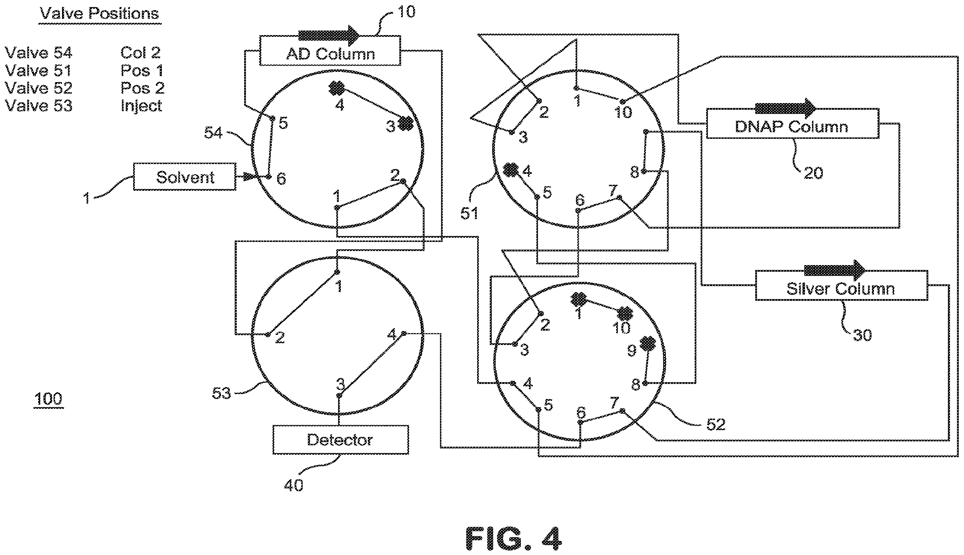

Fig. 1 is a schematic diagram illustrating the separation system 100 in accordance with the presently disclosed subject matter. The system 100 includes a sample and solvent delivery unit 1 that introduces the sample to be analyzed into the system 100 and the solvents that are used to separate the sample into one or more fractions. The delivery unit 1 is illustrated as a single unit. The presently disclosed subject matter is not intended to be limited to a single combined unit; rather, it is contemplated and considered to be well within the scope of the presently disclosed subject matter that the sample deliverly unit and the solvent delivery unit may be separate components that are each operatively connected to the other components of the system 100. The separation system 100 includes three columns 10, 20 and 30. The first column 10 is an asphaltene determinator column. The second column 20 is a DNAP column containing 2,4-dinitroanilino-propyl-silica gel. The third column 30 is a silver-ion-loaded-strong-cation-exchange-silica gel (Ag⁺SCX⁻). The separation system 100 for use in connection with the presently disclosed subject matter utilizes two similar high performance liquid chromatography columns (second and third, each being 250 mm x 4.6 mm) disclosed in US Patent No. 8,114,678). The first column (asphaltenes determinator column) is a relatively larger column (250 mm x 7.0 mm) which allows a loading of 2-5 mg of a resid sample. The first column 10, the second column 20 and third column 30 are connected through switching valves 51-54 illustrated in Figures 4-9. The system 100 also includes a detector 40 for detecting the separated fractions. The detector 40 is preferably an evaporative light scattering detector (ELSD).

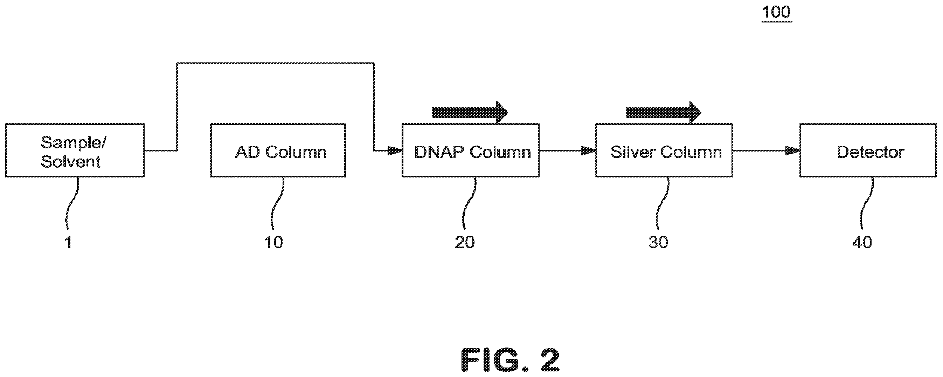

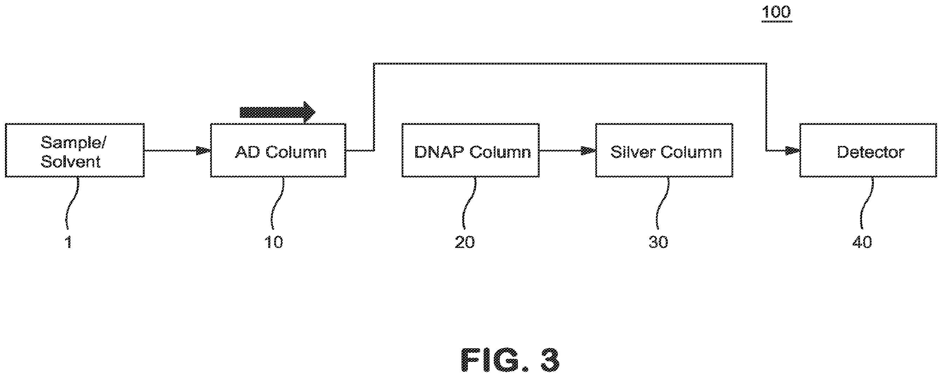

In a first operating mode illustrated in Fig. 1, the separation system 100 separates a total vacuum resid sample into eight fractions (i.e., asphaltenes, saturates, 1-4+ ring class aromatics, sulfides and polars). In the first operating mode, each of the column 10, 20 and 30 are utilized in order to separate the total vacuum resid sample into sub-fractions. In a second operating mode illustrated in Fig. 2, the separation system 100 separates either vacuum gas oil (VGO) or de-asphalted oil (DAO) into seven fractions (i.e., saturates, 1-4+ ring class aromatics, sulfides and polars). In the second operating mode, the first column 10 is bypassed, as illustrated in Figure 2. In the third operating mode, the separation system 100 separates a resid sample into asphaltenes and DAO. In the third operating mode, the second column 20 and the third column 30 are bypassed as illustrated in Figure 3.

Valves 51, 52, 53 and 54 are provided to control the flow of solvent and samples through the first, second and third columns 10, 20, 30. The valves 51, 52, 53 and 54 are operatively couple to each other and the columns. With such an arrangement, the system 100 can be switched between the three operating modes based upon the operating of the valves. The switching valve also serve to control the flow of solvents and samples through the columns to separate the samples into fractions. The first switching valve 51 is operatively connected to the second column 20, the third column 30, and the second switching valve 52. The second switching valve 52 is operatively connected to the second column 20, the third column 30, the first switching valve 51, the third switching valve 53 and the fourth valve 54. The third switching valve 53 is operatively connected to the second switching valve 52, the fourth valve 54, the first column 10 and the detector 40. A fourth valve 54 is operatively connected to the delivery unit 1, the first column 10, the second switching valve 52 and the third switching valve 53.

Preferably, the first switching valve 51 and the second switching valve 52 are ten-port switching valves. The third switching valve 53 is preferably a four-port switching valve. The fourth valve 54 is preferably a thermostat six-port switching valve.

The solvent supply unit 1 is programmed to deliver four different solvents and mixtures thereof in a selected ratio for a specified duration at a desired rate. The solvents include heptane, methylene chloride, methanol and toluene. The solvent flow rate used is 1.5 ml/min.

During the fraction separation protocol in connection with the presently disclosed subject matter in the first separation operating mode associated with the fractionation of a total vacuum resid sample, the valves 51-54 are switched between first and second positions to control the flow of sample and solvent through the first, second and third columns 10, 20 and 30 to facilitate separation of the total vacuum resid sample into eight fractions. The mixture of solvents delivered by the delivery unit 1 for the first operating mode may vary. The examples provided herein are illustrative but not intended to be limiting; rather, various mixtures of solvents are considered to be well within the scope of the presently disclosed subject matter.

The elution of eight classes of compounds from a total vacuum resid sample in the first separation operating mode will now be described in greater detail in connection with the Figures 4-9. The first separation operating mode is illustrated in Figure 1.

A 10 mg total vacuum resid sample as a 10% solution in chlorobenzene is fed from the delivery unit 1 into the separation system 100. Figure 4 illustrates the initial configuration of the system 100 in the sample injection stage. In this stage, the sample is injected into the system 100 and the asphaltenes precipitate out of the sample in the first column 10. In the injection stage, the first and second switching valves 51 and 52 are in a first position, as shown in Figure 4. The third switching valve 53 is in the an injection position, as shown in Figure 4. The fourth valve 54 is in a column 2 position. With such an arrangement, the sample and the predetermined solvents pass through the fourth valve 54 into the first column 10 where the asphaltenes precipitate producing a de-asphalted sample. The de-asphalted sample and the solvents pass through the third switching valve 53 back to the fourth valve 54 then to the second switching valve 52 and the first switching valve 51 before passing to the second column 20. After passing through column 20, the solvent passes through the column 30 via switching valves 51 and 52 before going to the detector 40. In the injection stage, the delivery unit 1 supplies only heptane into the system, as indicated in Table 1.

**Table 1: Elution Steps and Solvent Delivery Schedule for the First Operating Mode**

| **Elution Step** | **Time (min)** | **Heptane %** | **Methylene Chloride %** | **Methanol %** | **Toluene %** |
|---|---|---|---|---|---|
| Asphaltene Precipitation in Column 10 and Moving of Rest of Sample to Column 20 | Initial | 100 | 0 | 0 | 0 |
| | 5.00 | 100 | 0 | 0 | 0 |
| Eluting Saturates and Moving ARC-1 to Column 30 | 6.25 | 100 | 0 | 0 | 0 |
| | 10.50 | 100 | 0 | 0 | 0 |
| Eluting ARC-1 from Column 30 | 12.00 | 93 | 6 | 0 | 1 |
| | 14.00 | 93 | 6 | 0 | 1 |
| | 15.00 | 100 | 0 | 0 | 0 |
| | 18.00 | 100 | 0 | 0 | 0 |
| Continuation of ARC-1 Elution & Moving of ARC-2 from Column 20 to Column 30 | 18.00 | 100 | 0 | 0 | 0 |
| | 21.00 | 100 | 0 | 0 | 0 |
| | 21.05 | 85 | 15 | 0 | 0 |
| | 22.00 | 85 | 15 | 0 | 0 |
| | 22.05 | 96 | 4 | 0 | 0 |
| | 23.50 | 96 | 4 | 0 | 0 |
| Eluting ARC-2 from Column 30 | 23.55 | 0 | 80 | 0 | 20 |
| | 26.50 | 0 | 100 | 0 | 0 |
| Continuation of ARC-2 Elution & Moving ARC-3 from Column 20 to Column 30 | 29.50 | 75 | 25 | 0 | 0 |
| | 38.50 | 75 | 25 | 0 | 0 |
| Eluting ARC-3 from Column 30 | 38.55 | 0 | 70 | 0 | 30 |
| | 42.00 | 0 | 90 | 0 | 10 |
| | 44.00 | 15 | 70 | 5 | 10 |
| Moving ARC-4+ from Column 20 to Column 30 | 44.00 | 15 | 70 | 5 | 10 |
| | 48.50 | 15 | 70 | 5 | 10 |
| Eluting ARC-4 from Column 30 | 48.55 | 0 | 80 | 15 | 5 |
| | 55.00 | 0 | 65 | 15 | 20 |
| Backflushing Concentrated Sulfides from Column 30 | 55.05 | 0 | 65 | 15 | 20 |
| | 65.00 | 0 | 65 | 15 | 20 |
| Backflushing Polars from Column 20 | 65.00 | 0 | 65 | 15 | 20 |
| | 71.00 | 0 | 100 | 0 | 0 |
| Column 20 & Column 30 Cleaning | 71.05 | 0 | 100 | 0 | 0 |
| | 81.00 | 0 | 100 | 0 | 0 |
| Eluting of Asphaltene from Column 10 (Column 20 & 30 by-passed) | 81.05 | 0 | 90 | 10 | 0 |
| | 85.00 | 0 | 90 | 10 | 0 |
| System Cleaning and re-generation | 90.00 | 0 | 100 | 0 | 0 |
| | 95.00 | 0 | 100 | 0 | 0 |
| | 95.01 | 100 | 0 | 0 | 0 |
| | 145.00 | 100 | 0 | 0 | 0 |

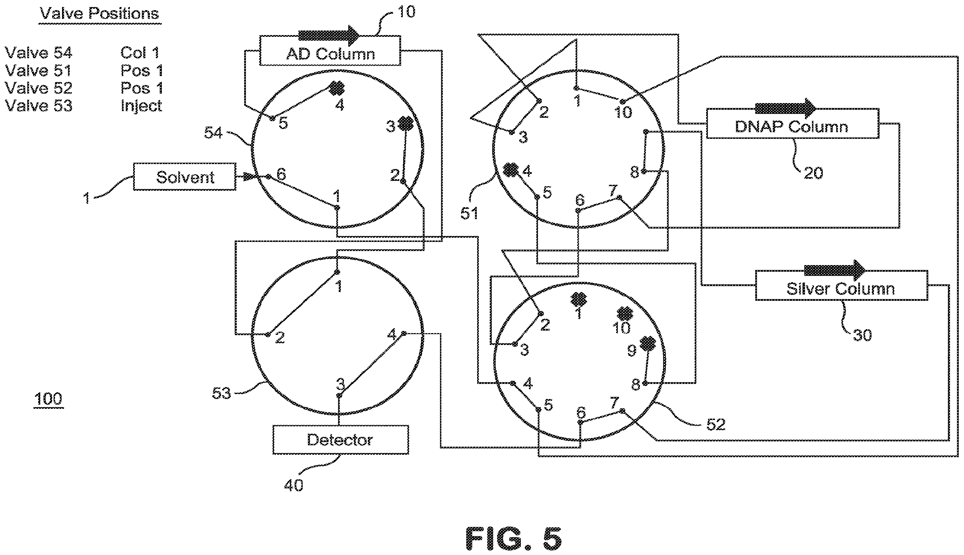

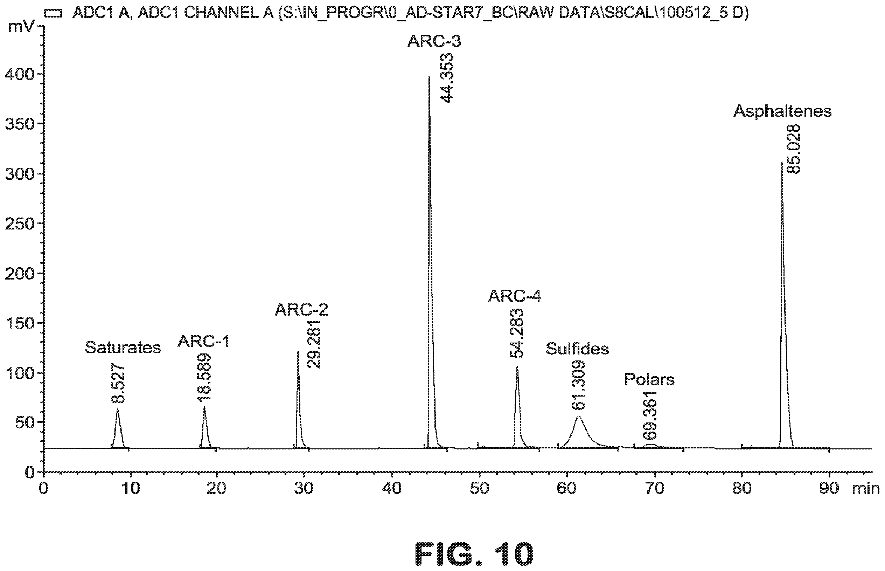

The elution of saturates from the sample will now be described in connection with Figure 5. In this saturates elution stage, the fourth valve 54 is moved to the column 1 position such that the first colum 10 is bypassed. The first and second switching valves 51 and 52 remain in the first position. The third switching valve 53 remains in the injection position. With such an arrangement, the predetermined solvents pass through the fourth valve 54 to the second switching valve 52 to first switching valve 51 into the second column 20 when the saturates and the 1-Ring Aromatics or ARC-1 are moved to column 30. The eluted saturates and the ARC-1 fraction pass out of the second column 20 through the first switching valve 51 to the second switching valve 52 and back to the first switching valve 51 before entering the third column 30. The ARC-1 fraction remains in the third column 30 while the eluted saturates pass through the third column 30 to the second switching valve 52 to the third switching valve 53 before being detected by the detector 40. An example of the detected saturates for one sample is illustrated in Figure 10. In the saturates elution stage, the delivery unit 1 again supplies only heptane into the system, as indicated in Table 1.

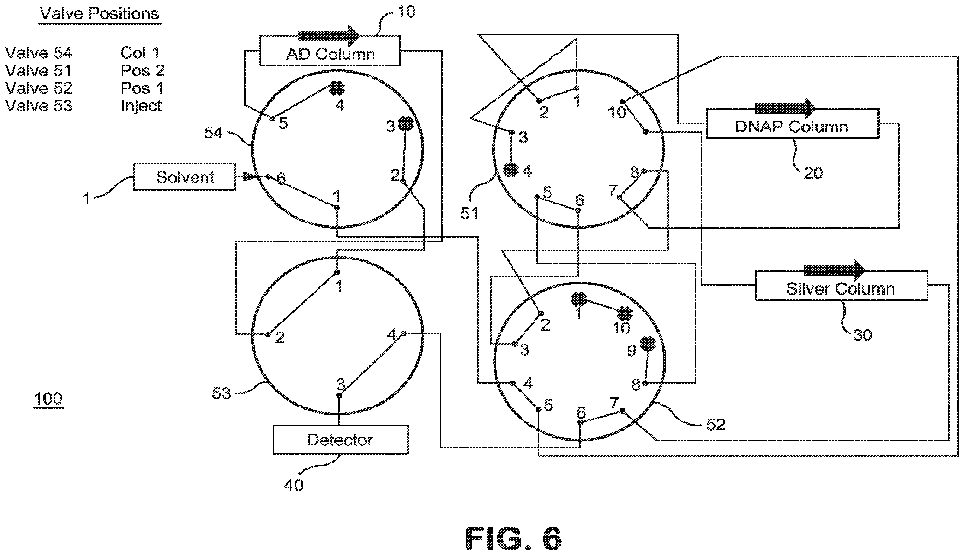

The elution of the ARC-1 fraction from the sample will now be described in connection with Figure 6. In this ARC-1 elution stage, the fourth valve 54 remains in the column 1 position such that the first colum 10 remains bypassed. The first switching valve 51 is moved to the second position and the second switching valve 52 remains in the first position. The third switching valve 53 remains in the injection position. With such an arrangement, the second column 20 is also bypassed such that the predetermined solvents pass through the fourth valve 54 to the second switching valve 52 to first switching valve 51 into the third column 30 where the ARC-1 fraction is eluted. The eluted ARC-1 fraction pass from the third column 30 through to the second switching valve 52 to the third switching valve 53 before being detected by the detector 40. An example of the detected ARC-1 fraction for one sample is illustrated in Figure 10. In the ARC-1 elution stage, the delivery unit 1 initially supplies a mixture of heptane, methylene chloride and toluene before switching to a sole supply of heptane, as indicated in Table 1. The presently disclosed subject matter is operated at room temperature. This results in a significant energy savings compared to conventional procedures, which are operated at -40°C.

After a predetermined time during the ARC-1 elution stage, the first switching valve 51 is also returned to the first postion. The positions of the second switching valve 52 and the third switching valve remains unchanged. The system 100 returns to the set-up illustrated in Figure 5. With such an arrangement, the elution of the ARC-1 fraction continues from the third column 30 and the ARC-2 fraction is moved from the second column 20 to the third column 30. In the continuation of the ARC-1 elution/moving of ARC-2 stage, the delivery unit 1 supplies heptane before switching to a mixture of heptane and methylene chloride, as indicated in Table 1.

The elution of the ARC-2 fraction from the sample will now be described in connection with Figure 6. In this ARC-2 elution stage, the system 100 is returned to the set-up illustrated in Figure 6 such that the first and second columns 10 and 20 are bypassed. The predetermined solvents pass through the fourth valve 54 to the second switching valve 52 to first switching valve 51 into the third column 30 where the ARC-2 fraction is eluted. The eluted ARC-2 fraction passes out of the third column 30 through to the second switching valve 52 to the third switching valve 53 before being detected by the detector 40. An example of the detected ARC-2 fraction for one sample is illustrated in Figure 10. In the ARC-2 elution stage, the delivery unit 1 initially supplies a mixture of methylene chloride and toluene before switching to a sole supply of methylene chloride, as indicated in Table 1.

After a predetermined time during the ARC-2 fraction elution stage, the first switching valve 51 is also returned to the first postion. The positions of the second switching valve 52 and the third switching valve remains unchanged. The system 100 returns to the set-up illustrated in Figure 5. With such an arrangement, the elution of the ARC-2 fraction continues from the third column 30 and the ARC-3 fraction is moved from the second column 20 to the third column 30. In the continuation of the ARC-2 elution/moving of ARC-3 stage, the delivery unit 1 supplies a mixture of heptane and methylene chloride, as indicated in Table 1.

The elution of the ARC-3 fraction from the sample will now be described in connection with Figure 6. In this ARC-3 elution stage, the system 100 is returned to the set-up illustrated in Figure 6 such that the first and second columns 10 and 20 are bypassed. The predetermined solvents pass through the fourth valve 54 to the second switching valve 52 to first switching valve 51 into the third column 30 where the ARC-3 fraction is eluted. The eluted ARC-3 fraction passes out of the third column 30 through to the second switching valve 52 to the third switching valve 53 before being detected by the detector 40. An example of the detected ARC-3 fraction for one sample is illustrated in Figure 10. In the ARC-3 elution stage, the delivery unit 1 initially supplies a mixture of methylene chloride and toluene before switching to a mixture of heptane, methylene chloride, methanol and toluene, as indicated in Table 1.

After a predetermined time during the ARC-3 elution stage, the first switching valve 51 is also returned to the first postion. The positions of the second switching valve 52 and the third switching valve remains unchanged. The system 100 returns to the set-up illustrated in Figure 5. With such an arrangement, the elution of the ARC-3 fraction continues from the third column 30 and the ARC-4+ fraction is moved from the second column 20 to the third column 30. In the continuation of the ARC-3 elution/moving of ARC-4+ stage, the delivery unit 1 supplies a mixture of heptane, methylene chloride, methanol and toluene, as indicated in Table 1.

The elution of the ARC-4+ fraction from the sample will now be described in connection with Figure 6. In this ARC-4+ elution stage, the system 100 is returned to the set-up illustrated in Figure 6 such that the first and second columns 10 and 20 are bypassed. The predetermined solvents pass through the fourth valve 54 to the second switching valve 52 to first switching valve 51 into the third column 30 where the ARC-4+ fraction is eluted. The eluted ARC-4+ fraction passes out of the third column 30 through to the second switching valve 52 to the third switching valve 53 before being detected by the detector 40. An example of the detected ARC-4+ fraction for one sample is illustrated in Figure 10. In the ARC-4+ elution stage, the delivery unit 1 initially supplies a mixture of methylene chloride, methanol and toluene, as indicated in Table 1. During the ARC-4+ elution stage, the percentage of methylene chloride in the solvent mixture is decreased from 80% to 65% after a predetermined time. The percentage of toluene is increased from 5% to 20%.

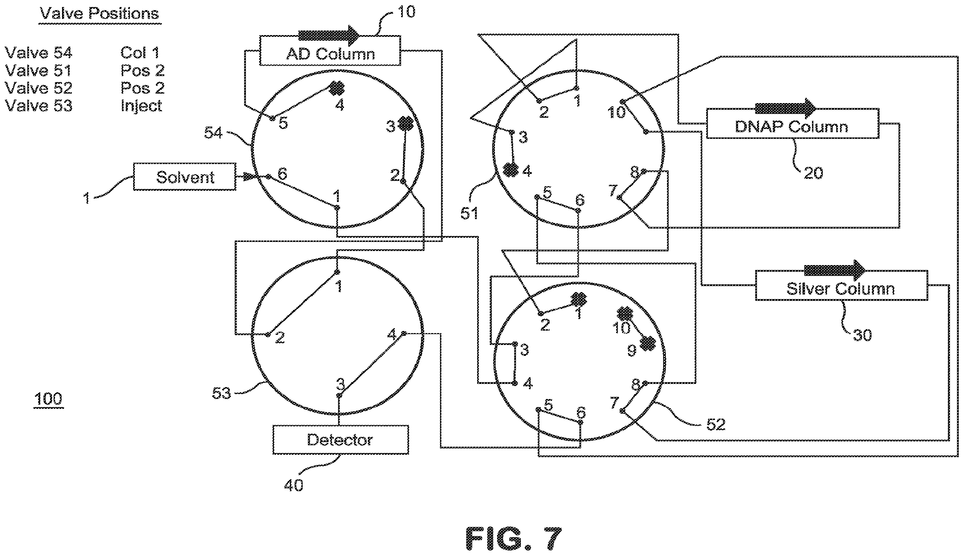

The removal of concentrated sulfides will now be described in connection with Figure 7. Upon completion of the elution of the ARC-4+ fraction, concentrated sulfides are removed from the system 100 by backflushing the third column 30. In the backflushing of sulfides stage, the first and second switching valves 51 and 52 are moved to the second position. The fourth valve 54 remains in the column 1 position and the third switching valve 53 remains in the inject position. With this arrangement, the first and second columns 10 and 20 are bypassed. The predetermined solvents pass through the fourth valve 54 to the second switching valve 52 to first switching valve 51 back to the second swithing valve 52 before entering the third column 30 where the sulfides are backflushed from the third column 30. The sulfides then proceed through the first switching valve 51 to second switching valve 52 and then to the third switching valve 53 before being detected by the detector 40. An example of the detected sulfides fraction for one sample is illustrated in Figure 10. In the sulfides backflushing stage, the delivery unit 1 supplies a mixture of methylene chloride, methanol and toluene, as indicated in Table 1.

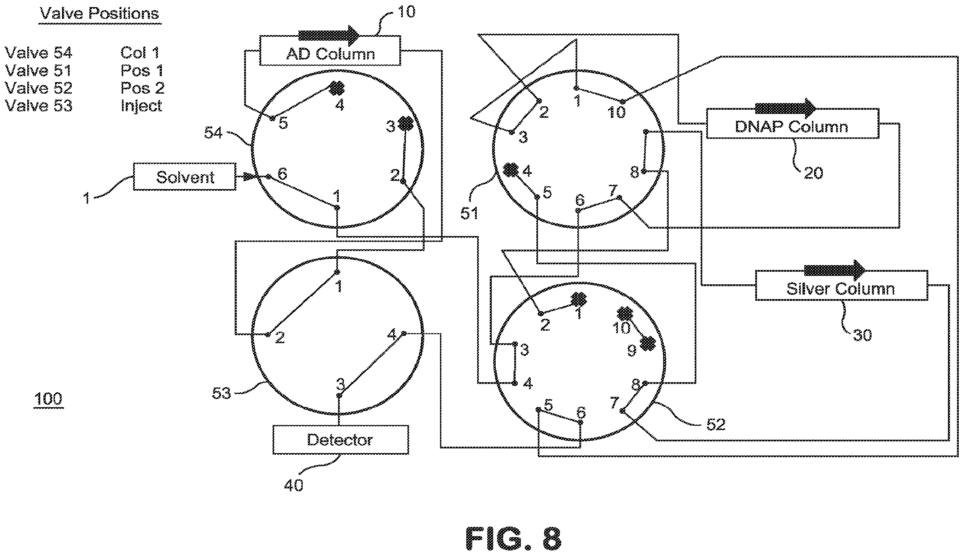

The removal of polars will now be described in connection with Figure 8. Upon completion of the backflushing of sulfides, polar fractions are removed from the system 100 by backflushing the second column 20. In the backflushing of polars stage, the first switching valve 51 is returned to the first position. The fourth valve 54 remains in the column 1 position, the second switching valve 52 remains in the second position and the third switching valve 53 remains in the inject position. With this arrangement, the first and third columns 10 and 30 are bypassed. The predetermined solvents pass through the fourth valve 54 to the second switching valve 52 to first switching valve 51 before entering the second column 20 where the polars are backflushed from the second column 20. The polars then proceed through the first switching valve 51, the second switching valve 52 and then the third switching valve 53 before being detected by the detector 40. An example of the detected polars fraction for one sample is illustrated in Figure 10. In the sulfides backflushing stage, the delivery unit 1 initially supplies a mixture of methylene chloride, methanol and toluene, as indicated in Table 1. After a predetermined time, the delivery unit 1 supplies only methylene chloride.

Upon completion of the backflushing of polars from the sample, the system 100 is returned to the set-up illustrated in Figure 5. The first and second switching valves 51 and 52 are in position 1. The third switching valve 53 is in the inject position and the fourth valve 54 is in the column 1 position. With this arrangement, only the first colum 10 is bypassed. The second and third columns 20 and 30 are now ready for an initial cleaning stage. In this initial cleaning stage, the delivery unit 1 supplies methylene chloride, as indicated in Table 1, for a predetermined time period.

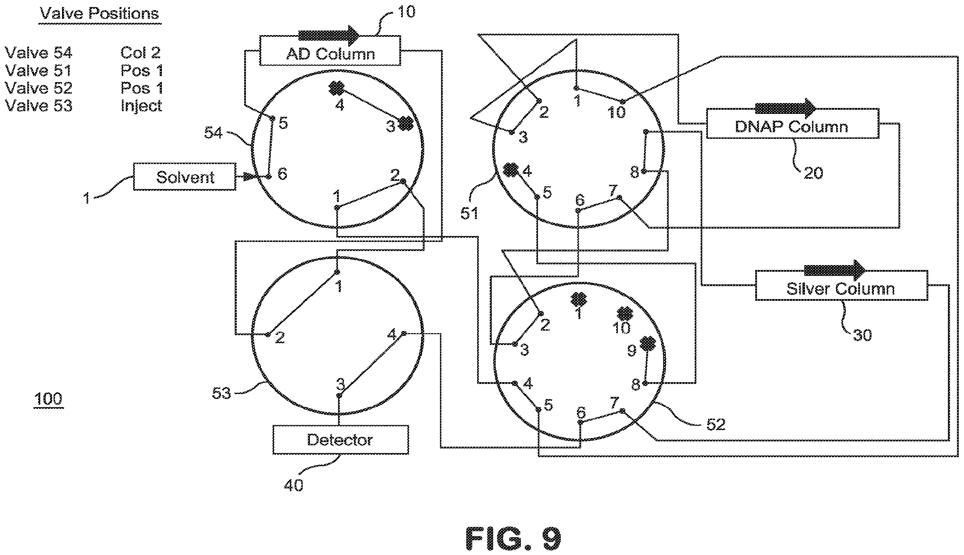

Upon completion of the initial cleaning stage, the asphaltenes are eluted from the system 100. The set-up for the asphaltene elution stage is illustrated in Figure 9. For this stage, the first and second switching valve 51 and 52 are in the first position, the third switching valve 53 is in the load position and the fourth valve is in the column 2 position. With this arrangement, the second and third columns 20 and 30 are bypassed. The predetermined solvents pass through the fourth valve 54 to the first column 10 where the asphaltenes are eluted from the first column 10. The eluted asphaltenes then proceed through the third switching valve 53 before being detected by the detector 40. An example of the detected asphaltenes fraction for one sample is illustrated in Figure 10. During asphaltenes elution stage, the delivery unit 1 supplies a mixture of methylene chloride and methanol, as indicated in Table 1.

Upon completion of the asphaltene elution stage, the system 100 is cleaned and regenerated. This accomplished by returning the system set-up to the position illustrated in Figure 4. The first and second switching valves 51 and 52 are in a first position, as shown in Figure 4. The third switching valve 53 is in the injection position. The fourth valve 54 is in a column 2 position. With such an arrangement, none of the columns are bypassed. In the injection stage, the delivery unit 1 initially supplies only methylene chloride through the system 100 as indicated in Table 1. After a predetermined time, the supply is switched to heptane. The system 1 is now ready to analyze another sample.

In order to establish the repeatability/reproducibility of the measurements obtained from the fraction elution steps disclosed above, six runs were made using a total resid sample. Each of the above described separation steps was repeated. The average values (wt %) for each of the eight fractions from all the six runs along with the corresponding known Prep-HPLC values for the same total resid fraction are provided in Table 2. As shown by the data in Table 2, although there are small differences between the ARC-3 and sulfides fractions average values, the values obtained in accordance with the presently disclosed subject matter compared very well with the average HPLC values that have be determined in previous Prep-HPLC testing. Table 2 clearly demonstrates that the precision and repeatability of the presently disclosed subject matter are consistent with those of Prep-HPLC.

**Table 2: Comparison of Fractions Obtained from Current Separation Technique and Conventional HPLC Technique for Total Vacuum Resid**

| | ***Sats*** | ***ARC-1*** | ***ARC-2*** | ***ARC-3*** | ***ARC-4*** | ***Sulfides*** | ***Polars*** | ***Asph*** | ***Recovery*** | |
|---|---|---|---|---|---|---|---|---|---|---|
| Run 1 | 10.9 | 5.8 | 9.5 | 18.2 | 20.3 | 13.6 | 4.7 | 17.0 | 98.3 | |
| Run 2 | 10.0 | 5.3 | 9.8 | 18.4 | 20.8 | 13.8 | 5.0 | 16.9 | 98.2 | |
| Run 3 | 10.0 | 5.3 | 9.6 | 18.3 | 20.8 | 13.6 | 5.2 | 17.1 | 98.2 | |
| Run 4 | 10.6 | 5.4 | 10.1 | 19.0 | 20.3 | 14.0 | 5.4 | 15.3 | 94.7 | |
| Run 5 | 10.3 | 5.5 | 9.9 | 19.0 | 20.4 | 13.7 | 5.5 | 15.7 | 94.0 | |
| Run 6 | 10.3 | 5.5 | 9.9 | 19.1 | 20.3 | 13.7 | 5.3 | 15.8 | 94.4 | |
| **Average** | **10.4** | **5.5** | **9.8** | **18.7** | **20.5** | **13.7** | **5.2** | **16.3** | **96.3** | |
| STDEV | 0.3 | 0.2 | 0.2 | 0.4 | 0.3 | 0.2 | 0.3 | 3.8 | 2.1 | |
| **Prep-HPLC** | **10.4** | **5.4** | **10.4** | **17.4** | **20.9** | **14.7** | **5.0** | **15.8** | | |

The presently disclosed subject matter when operated in the first operating mode represents a significant reduction in testing time. Sample analysis which was previously done in several weeks due to a time consuming and tedious asphaltene removal process may be completed in under two hours.

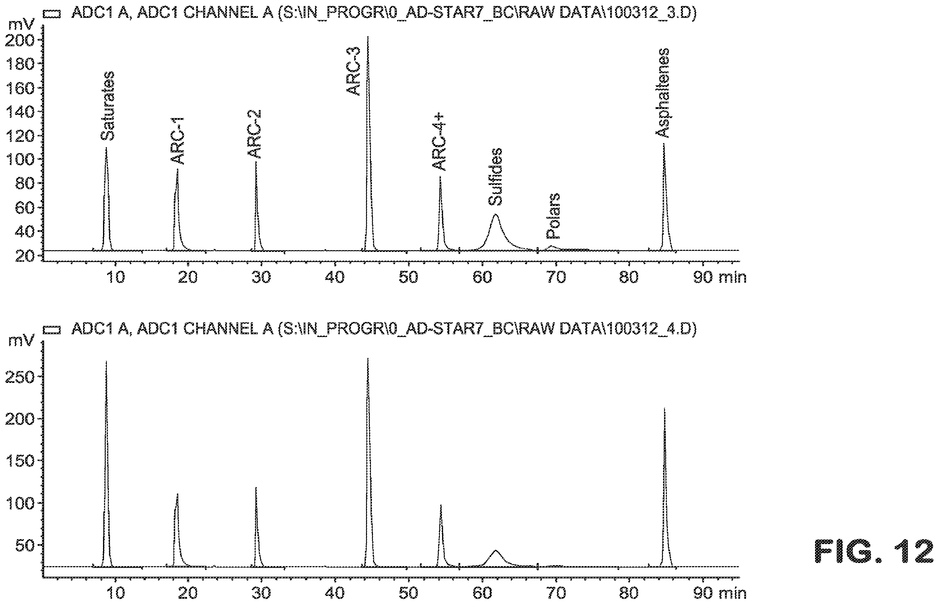

The first operating mode is not limited for use in analyzing total vacuum resid samples; rather, other resids may be analyzed including but not limited to total atmospheric resids. Figure 12 illustrates the detected fractions including asphaltenes for two atmospheric resids.

During the fraction separation protocol in connection with the presently disclosed subject matter in the second separation operating mode, the valves 51-54 are switched between first and second positions to control the flow of sample and solvent through the first, second and third columns 10, 20 and 30 to facilitate separation of a de-asphalted oil (DAO) sample or a vacuum gas oil (VGO) sample into seven fractions. The fourth valve 54 is set to the column 1 position such that the first column 10 is bypassed during the entire second operating mode. The mixture of solvents delivered by the delivery unit 1 for the second operating mode may vary. The examples provided herein are illustrative but not intended to be limiting; rather, various mixtures of solvents are considered to be well within the scope of the presently disclosed subject matter.

The elution of seven classes of compounds from a DAO sample or a VGO sample in the second separation operating mode will now be described in greater detail in connection with the Figures 5-8. The second separation operating mode is illustrated in Figure 2.

The DAO (or VGO) sample solution in heptane (100 mg/10 ml) is fed from the delivery unit 1 into the separation system 100. In a typical analysis, a 20 microliters injection is made. In the second separation operating mode, the fourth valve 54 is in a column 1 position. With such an arrangement, the first column 10 is bypassed. The elution of saturates from the DAO sample or VGO sample will now be described in connection with Figure 5. In this saturates elution stage, the first and second switching valves 51 and 52 are in the first position. The third switching valve 53 is in the injection position. With such an arrangement, the predetermined solvents pass through the fourth valve 54 to the second switching valve 52 to the first switching valve 51 into the second column 20 where the saturates are eluted. The eluted saturates and the ARC-1 fraction pass from the second column 20 through the first switching valve 51 to the second switching valve 52 and back to the first switching valve 53 before entering the third column 30. The ARC-1 fraction remains in the third column 30 while the eluted saturates pass through the third column 30 to the second switching valve 52 to the third switching valve 53 before being detected by the detector 40. In the saturates elution stage, the delivery unit 1 supplies only heptane into the system, as indicated in Table 3 below. A typical solvent flow rate used is 1.5 ml/min.

**Table 3: Elution Steps and Solvent Delivery Schedule for the Second Operating Mode**

| **Elution Step** | **Time (min)** | **Heptane %** | **Methylene Chloride %** | **Methanol %** | **Toluene %** |
|---|---|---|---|---|---|
| Eluting Saturates and Moving ARC-1 to Column 30 | 1.00 | 100 | 0 | 0 | 0 |
| | 1.05 | 92 | 8 | 0 | 0 |
| | 2.00 | 100 | 0 | 0 | 0 |
| | 7.00 | 100 | 0 | 0 | 0 |
| Eluting ARC-1 from Column 30 | 8.50 | 0 | 90 | 0 | 10 |
| | 10.50 | 0 | 100 | 0 | 0 |
| | 11.50 | 100 | 0 | 0 | 0 |
| | 14.50 | 100 | 0 | 0 | 0 |
| Continuation of ARC-1 Elution & Moving of ARC-2 from Column 20 to Column 30 | 17.50 | 100 | 0 | 0 | 0 |
| | 17.55 | 85 | 15 | 0 | 0 |
| | 18.50 | 85 | 15 | 0 | 0 |
| | 18.55 | 96 | 4 | 0 | 0 |
| | 20.00 | 96 | 4 | 0 | 0 |
| Eluting ARC-2 from Column 30 | 20.05 | 0 | 80 | 0 | 20 |
| | 23.00 | 0 | 100 | 0 | 0 |
| Continuation of ARC-2 Elution & Moving ARC-3 from Column 20 to Column 30 | 26.00 | 75 | 25 | 0 | 0 |
| | 35.00 | 75 | 25 | 0 | 0 |
| Eluting ARC-3 from Column 30 | 35.05 | 0 | 70 | 0 | 30 |
| | 38.50 | 0 | 90 | 0 | 10 |
| | 40.50 | 15 | 70 | 5 | 10 |
| Moving ARC-4+ from Column 20 to Column 30 | 40.50 | 15 | 70 | 5 | 10 |
| | 45.00 | 15 | 70 | 5 | 10 |
| Eluting ARC-4+ from Column 30 | 45.05 | 0 | 80 | 15 | 5 |
| | 51.50 | 0 | 65 | 15 | 20 |
| Backflushing Concentrated Sulfides from Column 30 | 51.55 | 0 | 65 | 15 | 20 |
| | 61.50 | 0 | 65 | 15 | 20 |
| Backflushing Polars from Column 20 | 61.50 | 0 | 65 | 15 | 20 |
| | 67.50 | 0 | 100 | 0 | 0 |
| Column 20 & Column 30 Cleaning and System Regeneration | 67.55 | 0 | 100 | 0 | 0 |
| | 80.00 | 0 | 100 | 0 | 0 |
| | 80.05 | 100 | 0 | 0 | 0 |
| | 120.00 | 100 | 0 | 0 | 0 |

The elution of the ARC-1 fraction from the sample will now be described in connection with Figure 6. In this ARC-1 elution stage, the first switching valve 51 is moved to the second position and the second switching valve 52 remains in the first position. The third switching valve 53 remains in the injection position. With such an arrangement, the second column 20 is also bypassed such that the predetermined solvents pass through the fourth valve 54 to the second switching valve 52 to the first switching valve 51 into the third column 30 where the ARC-1 fraction is eluted. The eluted ARC-1 fraction pass from the third column 30 through to the second switching valve 52 to the third switching valve 53 before being detected by the detector 40. In the ARC-1 elution stage, the delivery unit 1 initially supplies a mixture of methylene chloride and toluene before switching to a sole supply of methylene chloride and heptane, as indicated in Table 3 above.

After the ARC-1 elution stage, the first switching valve 51 is returned to the first postion. The positions of the second switching valve 52 and the third switching valve remains unchanged. The system 100 returns to the set-up illustrated in Figure 5. With such an arrangement, the ARC-2 fraction is moved from the second column 20 to the third column. In the moving of ARC-2 stage, the delivery unit 1 supplies a mixture of heptane and methylene chloride, as indicated in Table 3 above.

The elution of the ARC-2 fraction from the sample will now be described in connection with Figure 6. In this ARC-2 elution stage, the system 100 is returned to the set-up illustrated in Figure 6 such that the first and second columns 10 and 20 are bypassed. The predetermined solvents pass through the fourth valve 54 to the second switching valve 52 to the first switching valve 51 into the third column 30 where the ARC-2 fraction is eluted. The eluted ARC-2 fraction passes from the third column 30 through to the second switching valve 52 to the third switching valve 53 before being detected by the detector 40. In the ARC-2 elution stage, the delivery unit 1 initially supplies a mixture of methylene chloride and toluene before switching to a sole supply of methylene chloride, as indicated in Table 3.

After the ARC-2 fraction elution stage, the first switching valve 51 is returned to the first postion. The positions of the second switching valve 52 and the third switching valve remains unchanged. The system 100 returns to the set-up illustrated in Figure 5. With such an arrangement, the ARC-3 fraction is moved from the second column 20 to the third column 30. In the moving of ARC-3 stage, the delivery unit 1 supplies a mixture of heptane and methylene chloride, as indicated in Table 3 above.

The elution of the ARC-3 fraction from the VGO or DAO sample will now be described in connection with Figure 6. In this ARC-3 elution stage, the system 100 is returned to the set-up illustrated in Figure 6 such that the first and second columns 10 and 20 are bypassed. The predetermined solvents pass through the fourth valve 54 to the second switching valve 52 to the first switching valve 51 into the third column 30 where the ARC-3 fraction is eluted. The eluted ARC-3 fraction passes out of the third column 30 through to the second switching valve 52 to the third switching valve 53 before being detected by the detector 40. In the ARC-3 elution stage, the delivery unit 1 initially supplies a mixture of methylene chloride and toluene before switching to a mixture of heptane, methylene chloride, toluene and methanol as indicated in Table 3 above.

After the ARC-3 elution stage, the first switching valve 51 is returned to the first postion. The positions of the second switching valve 52 and the third switching valve 53 remains unchanged. The system 100 returns to the set-up illustrated in Figure 5. With such an arrangement, the ARC-4+ fraction is moved from the second column 20 to the third column 30. In the moving of ARC-4+ stage, the delivery unit 1 supplies a mixture of heptane, methylene chloride, toluene and methanol as indicated in Table 3 above.

The elution of the ARC-4+ fraction from the sample will now be described in connection with Figure 6. In this ARC-4+ elution stage, the system 100 is returned to the set-up illustrated in Figure 6 such that the first and second columns 10 and 20 are bypassed. The predetermined solvents pass through the fourth valve 54 to the second switching valve 52 to the first switching valve 51 into the third column 30 where the ARC-4+ fraction is eluted. The eluted ARC-4+ fraction passes out of the third column 30 through to the second switching valve 52 to the third switching valve 53 before being detected by the detector 40. In the ARC-4+ elution stage, the delivery unit 1 supplies a mixture of methylene chloride, methanol and toluene as indicated in Table 3 above.

The removal of concentrated sulfides will now be described in connection with Figure 7. Upon completion of the elution of the ARC-4+ fraction, concentrated sulfides are removed from the system 100 by backflushing the third column 30. In the backflushing of sulfides stage, the first and second switching valves 51 and 52 are moved to the second position. The third switching valve 53 remains in the inject position. With this arrangement, the first and second columns 10 and 20 are bypassed. The predetermined solvents pass through the fourth valve 54 to the second switching valve 52 to first switching valve 51 back to the second swithing valve 52 before entering the third column 30 where the sulfides are backflushed from the third column 30. The sulfides then proceed through the first switching valve 51 to the second switching valve 52 and then to the third switching valve 53 before being detected by the detector 40. In the sulfides backflushing stage, the delivery unit 1 supplies a mixture of methylene chloride, methanol and toluene, as indicated in Table 3.

The removal of polars will now be described in connection with Figure 8. Upon completion of the backflushing of sulfides, polar fractions are removed from the system 100 by backflushing the second column 20. In the backflushing of polars stage, the first switching valve 51 is returned to the first position. The second switching valve 52 remains in the second position and the third switching valve 53 remains in the inject position. With this arrangement, the first and third columns 10 and 30 are bypassed. The predetermined solvents pass through the fourth valve 54 to the second switching valve 52 to the first switching valve 51 before entering the second column 20 where the polars are backflushed from the second column 20. The polars then proceed through the first switching valve 51, the second switching valve 52 and then the third switching valve 53 before being detected by the detector 40. In the sulfides backflushing stage, the delivery unit 1 initially supplies a mixture of methylene chloride, methanol and toluene, as indicated in Table 3. The delivery unit 1 then supplies solely methylene chloride

Upon completion of the backflushing of polars from the sample, the system 100 is returned to the set-up illustrated in Figure 5. The first and second switching valves 51 and 52 are in position 1. The third switching valve 53 is in the inject position. The second and third columns 20 and 30 are now ready for a cleaning and regeneration stage. In this cleaning stage, the delivery unit 1 supplies methylene chloride, as indicated in Table 3, for a predetermined time period. After a predetermined time period, the delivery unit 1 supplies only heptane for the remainder of the cleaning/regeneration stage. The system 1 is now ready to analyze another sample.

During the third separation operating mode of the presently disclosed subject matter, the valves 51-54 are switched between first and second positions to control the flow of sample and solvent through only the first column 10 to facilitate separation of the asphaltenes from total vacuum resid sample into an asphaltene fraction and DAO. The mixture of solvents delivered by the delivery unit 1 during the third separation operating mode may vary. The examples provided herein are illustrative but not intended to be limiting; rather, various mixtures of solvents are considered to be well within the scope of the presently disclosed subject matter.

The separation of the asphaltene from the resid sample in the third separation operating mode will now be described in greater detail in connection with the Figure 9. The third separation operating mode is illustrated in Figure 3.

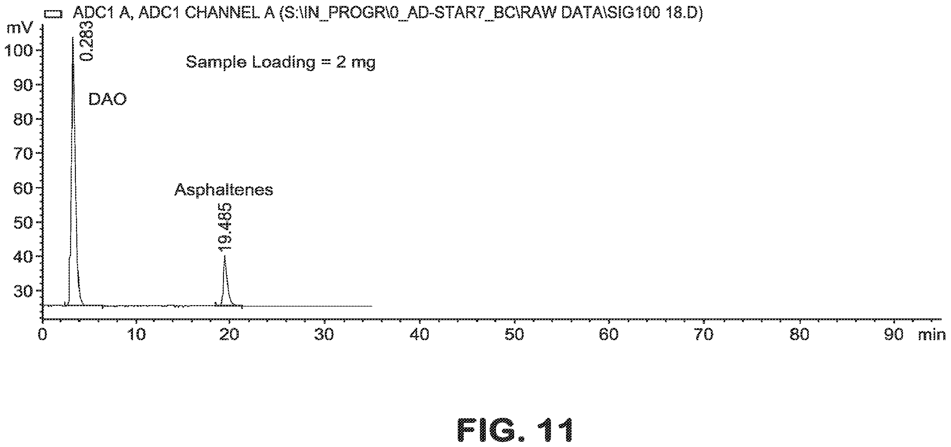

The resid sample is fed from the delivery unit 1 into the separation system 100. Figure 4 illustrates the initial configuration of the system 100. In this stage, the sample is injected into the system 100 and the asphaltenes precipitate out of the sample in the first column 10. In the injection stage, the first and second switching valves 51 and 52 are in a first position, as shown in Figure 9. The third switching valve 53 is in the an load position, as shown in Figure 9. The fourth valve 54 is in a column 2 position. With such an arrangement, the sample and the predetermined solvents pass through the fourth valve 54 into the first column 10 where the asphaltenes precipitate producing a de-asphalted sample. The de-asphalted sample and the solvents pass through the third switching valve 53 before passing to the detector 40. An example of the detected DAO fraction for one resid sample is illustrated in Figure 11. In the precipitation stage, the delivery unit 1 supplies only heptane into the system, as indicated in Table 4.

**Table 4: Elution Steps and Solvent Delivery Schedule for the First Operating Mode**

| **Elution Step** | **Time (min)** | **Heptane %** | **Methylene Chloride %** | **Methanol %** | **Toluene %** |
|---|---|---|---|---|---|
| Asphaltene Precipitation in Column 10 and Elution of Rest of the Sample (Columns 20 & 30 by-passed) | Initial | 100 | 0 | 0 | 0 |
| | 10.00 | 100 | 0 | 0 | 0 |
| Eluting of Asphaltene from Column 10 (Columns 20 & 30 by-passed) | 10.05 | 0 | 90 | 10 | 0 |
| | 20.00 | 0 | 90 | 10 | 0 |
| System Cleaning and re-generation | 20.05 | 0 | 100 | 0 | 0 |
| | 30.00 | 0 | 100 | 0 | 0 |
| | 30.05 | 100 | 0 | 0 | 0 |
| | 50.00 | 100 | 0 | 0 | 0 |

After completion of the precipitation of the asphaltenes and elution of the separated DAO, the asphaltenes are eluted from the system 100. The set-up for the asphaltene elution stage is illustrated in Figure 9. For this stage, the first and second switching valve 51 and 52 are in the first position, the third switching valve 53 is in the load position and the fourth valve is in the column 2 position. With this arrangement, the second and third columns 20 and 30 are bypassed. The predetermined solvents pass through the fourth valve 54 to the first column 10 where the asphaltenes are eluted from the first column 10. The eluted asphaltenes then proceed through the third switching valve 53 before being detected by the detector 40. An example of the detected asphaltenes fraction for one sample is illustrated in Figure 11. During the elution of asphaltenes, the delivery unit 1 supplies a mixture of methylene chloride and methanol, as indicated in Table 4.

Upon completion of the asphaltene elution stage, the system 100 is cleaned and regenerated. The delivery unit 1 initially supplies only methylene chloride through the system 100 as indicated in Table 4. After a predetermined time, the supply is switched to heptane. The system 1 is now ready to analyze another sample.

The presently disclosed subject matter permits analysis of higher temperature total vacuum and atmospheric resids as well as lower boiling temperature DAO and VGO samples. Furthermore, the presently disclosed subject matter provides a more rapid, high accurate analysis of the fractions composing a particular hydrocarbon sample. The testing protocol and its associated separation system result in a significant time savings which can be translated into improved efficiency in the refining process. Refinery operators are able to more readily and accurately adjust refinery operations to process the given hydrocarbon to produce a desired product slate.

The disclosed subject matter is not to be limited in scope by the specific embodiments described herein. Indeed, various modifications of the invention in addition to those described herein will become apparent to those skilled in the art from the foregoing description and the accompanying figures. Such modifications are intended to fall within the scope of the appended claims.

## Claims

1. A method of performing quantitative fractionation of a total vacuum resid sample, wherein the total vacuum resid sample contains asphaltenes, a saturates fraction, at least one aromatic ring class fraction, a sulfides fraction and a polars fraction, comprising:
providing a total vacuum resid sample;
introducing the total vacuum resid sample in a separation system having a first separation column, a second separation column, a third separation column, a solvent delivery unit and a plurality of switching valves interconnecting the first separation column, the second separation column, the third separation column and the solvent delivery unit establishing a flow path there between, wherein a selective operation of the plurality of switching valves modifies the flow path between the first separation column, the second separation column and the third separation column thereby facilitating the separation of the total vacuum resid sample into fractions, wherein the first separation column is an asphaltene determinator column, the second separation column is a DNAP column containing 2,4-dinitroanilino-propyl-silica gel and the third separation column contains a silver-ion-loaded-strong-cation-exchange-silica gel (Ag⁺SCX⁻);
performing an asphaltenes precipitation process in the first separation column to precipitate asphaltenes from the total vacuum resid sample and transferring a de-asphalted sample to the second separation column;
performing a saturates fraction removal process comprising eluting the saturates fraction from the de-asphalted sample in the second separation column by adjusting the switching valves to establish a flow path of the solvent which bypasses the first separation column;
performing an aromatic ring class fraction removal process comprising transferring at least one aromatic ring class fraction contained in the de-asphalted sample from the second separation column to the third separation column; and eluting the at least one aromatic ring class fraction from the third separation column by adjusting the switching valves to establish a flow path of the solvent which bypasses the first and the second separation column; thereafter
performing a sulfides fraction removal process in the third separation column comprising backflushing the third separation column to extract the sulfides fraction by adjusting the switching valves to establish a flow path of the solvent which bypasses the first and the second separation column; thereafter
performing a polars fraction removal process in the second separation column comprising backflushing the second separation column to extract the polars fraction by adjusting the switching valves to establish a flow path of the solvent which bypasses the first and the third separation column; and thereafter
performing an asphaltenes removal process in the first separation column to elute the precipitated asphaltenes from the first separation column by adjusting the switching valves to establish a flow path of the solvent which bypasses the second and the third separation column,
wherein the method further includes supplying the extracted saturates fraction, aromatic ring class fraction, sulfides fraction, polars fraction and asphaltenes fraction to a detector.

2. The method according to claim 1, wherein performing an asphaltenes precipitation process includes passing a first solvent through the first separation column to precipitate asphaltenes from the sample in the first separation column, preferably wherein the first solvent contains heptane.

3. The method according to any one of the preceding claims, wherein performing a saturates fraction removal process includes eluting the saturates fraction from the sample in the second separation column using a second solvent, preferably wherein the second solvent contains heptane.

4. The method according to claim 3, wherein supplying the extracted saturates fraction to the detector includes passing the extracted saturates fraction through the third separation column before entering the detector.

5. The method according to any one of the preceding claims, wherein performing an aromatic ring class fraction removal process comprising:
transferring an aromatic ring class-1 fraction contained in the sample from the second separation column to the third separation column using a second solvent; and
extracting the aromatic ring class-1 fraction from the third separation column using a third solvent.

6. The method according to claim 5, wherein performing an aromatic ring class fraction removal process further includes supplying the extracted aromatic ring class-1 fraction to a detector and/or wherein the composition of the third solvent varies over time, wherein third solvent initially contains a mixture of heptane, methylene chloride and toluene.

7. The method according to claim 5, wherein performing an aromatic ring class fraction removal process further comprises:
transferring an aromatic ring class-2 fraction contained in the sample from the second separation column to the third separation column using a fourth solvent, preferably the composition of the fourth solvent varies over time; and
extracting the aromatic ring class-2 fraction from the third separation column using a fifth solvent, preferably the composition of the fifth solvent varies over time and initially contains a mixture of methylene chloride and toluene,
more preferably supplying the extracted aromatic ring class-2 fraction to a detector.

8. The method according to claim 7, wherein performing an aromatic ring class fraction removal process further comprises:
transferring an aromatic ring class-3 fraction contained in the sample from the second separation column to the third separation column using a sixth solvent; and
extracting the aromatic ring class-3 fraction from the third separation column using a seventh solvent, preferably the composition of the seventh solvent varies over time and initially contains a mixture of methylene chloride and toluene,
more preferably further includes supplying the extracted aromatic ring class-3 fraction to a detector.

9. The method according to claim 8, wherein performing an aromatic ring class fraction removal process further comprises:
transferring an aromatic ring class-4+ fraction contained in the sample from the second separation column to the third separation column using an eighth solvent; and
extracting the aromatic ring class-4+ fraction from the third separation column using a ninth solvent
more preferably further includes supplying the extracted aromatic ring class-4+ fraction to a detector.

10. The method according to any one of the preceding claims, wherein backflushing the third separation column includes backflushing the third separation column using a solvent which contains a mixture of methylene chloride, methanol and toluene.

11. The method according to any one of the preceding claims, wherein backflushing the second separation column includes backflushing the second separation column using a solvent which initially contains a mixture of methylene chloride, methanol and toluene.

12. A separation system (100) for performing quantitative fractionation of a total vacuum resid sample, comprising:
a first separation column (10), wherein the first separation column is an asphaltene determinator column;
a second separation column (20), wherein the second separation column is a DNAP column containing 2,4-dinitroanilino-propyl-silica gel;
a third separation column (30), wherein the third separation column contains a silver-ion-loaded-strong-cation-exchange-silica gel (Ag⁺SCX⁻);
a solvent delivery unit (1) for supplying a separation solvent to at least one of the first separation column (10), the second separation column (20) and the third separation column (30); and
a plurality of switching valves (51-54) interconnecting the first separation column (10), the second separation column (20), the third separation column (30) and the solvent delivery unit (1) establishing a flow path therebetween, wherein the selective operation of the plurality of switching valves (51-54) modifies the flow path between the first separation column (10), the second separation column (20) and the third separation column (30),
wherein in a first operating mode the separation system is configured to separate a total vacuum resid sample into eight fractions, wherein each of the columns (10), (20) and (30) are selectively operated to separate the total vacuum resid sample into the eight fractions, and wherein an asphaltenes precipitation process is performed in the first separation column (10) to precipitate asphaltenes from the total vacuum resid sample, a saturates fraction removal process is performed in the second separation column (20) and third separation column (30) to extract a saturates fraction from the sample, an aromatic ring class fraction removal process is performed in the second separation column (20) and third separation column (30) to extract at least one aromatic ring class fraction from the sample, a sulfides fraction removal process is performed in the third separation column (30) to extract a sulfides fraction from the sample, a polars fraction removal process is performed in the second separation columns (20) to extract a polars fraction from the sample and an asphaltenes removal process is performed in the first separation column (10) to extract the precipitated asphaltenes from the sample,
wherein in a second operating mode the separation system is configured to separate a deasphalted heavy hydrocarbon sample into seven fractions, wherein each of the second separation column (20) and the third separation column (30) are selectively operated to separate the hydrocarbon sample into the seven fractions and the first separation column (10) is bypassed, wherein a saturates fraction removal process is performed in the second separation column (20) and third separation column (30) to extract a saturates fraction from the sample, an aromatic ring class fraction removal process is performed in the second separation column (20) and third separation column (30) to extract at least one aromatic ring class fraction from the sample, a sulfides fraction removal process is performed in the third separation column (30) to extract a sulfides fraction from the sample, and a polars fraction removal process is performed in the second separation columns (20) to extract a polars fraction from the sample,
wherein in a third operating mode the separation system is configured to separate a resid sample into asphaltenes and de-asphaltenated oil wherein the first separation column (10) is operated and the second separation column (20) and the third separation column (30) are by-passed, and
wherein the system further comprises a detector (40) for detecting the asphaltenes and fractions separated in each of the first, second and third operating modes and
wherein the separation system (100) can be switched between the three operating modes based upon the operating of the switching valves (51-54) and wherein the switching valves (51-54) are provided to control the flow of solvent and samples through the first, second and third columns (10), (20), (30) to separate the samples into fractions, and
wherein a first switching valve (51) is operatively connected to the second separation column (20), the third separation column (30) and a second switching valve (52); the second switching valve (52) is operatively connected to the second separation column (20), the third separation column (30), the first switching valve (51), a third switching valve (53) and a fourth switching valve (54); the third switching valve (53) is operatively connected to the second switching valve (52), the fourth switching valve (54), the first separation column (10) and the detector (40); the fourth switching valve (54) is operatively connected to the delivery unit (1), the first separation column (10), the second switching valve (52) and the third switching valve (53).

13. The separation system according to claim 12, wherein in the first operation mode each of the first separation column, the second separation column and the third separation column are selectively operated to separate the total vacuum resid sample into eight fractions including asphaltenes, saturates fraction, at least one aromatic ring class fraction, sulfides fraction, and polars fraction.

## Patentansprüche

1. Verfahren zur Durchführung von quantitativer Fraktionierung einer Gesamtvakuumrückstandsprobe, bei dem die Gesamtvakuumrückstandsprobe Asphaltene, eine Fraktion von Gesättigten, mindestens eine Fraktion einer Klasse von aromatischen Ringen, eine Fraktion von Sulfiden und eine Fraktion von Polaren enthält, das umfasst:
Bereitstellen einer Gesamtvakuumrückstandsprobe,
Einführen der Gesamtvakuumrückstandsprobe in ein Trennsystem mit einer ersten Trennsäule, einer zweiten Trennsäule, einer dritten Trennsäule, einer Lösungsmittelabgabeeinheit und einer Vielzahl von Umschaltventilen, die die erste Trennsäule, die zweite Trennsäule, die dritte Trennsäule und die Lösungsmittelabgabeeinheit miteinander verbinden und einen Fließweg dazwischen erstellen, wobei der selektive Betrieb der Vielzahl von Umschaltventilen den Fließweg zwischen der ersten Trennsäule, der zweiten Trennsäule und der dritten Trennsäule modifiziert, wodurch die Auftrennung der Gesamtvakuumrückstandsprobe in Fraktionen erleichtert wird, wobei die erste Trennsäule eine Asphaltendeterminator-Säule ist, die zweite Trennsäule eine DNAP-Säule ist, die 2,4-Dinitroanilinpropylsiliciumdioxidgel enthält, und die dritte Trennsäule Silberion-beladenes-starkes-Kationen-Austausch-siliciumdioxidgel (Ag⁺SCX⁻) enthält,
Durchführen eines Asphaltenausfällungsverfahrens in der ersten Trennsäule, um Asphaltene aus der Gesamtvakuumrückstandsprobe auszufällen, und Überführen von entasphaltenisierter Probe zu der zweiten Trennsäule,
Durchführen eines Entfernungsverfahrens für eine Fraktion von Gesättigten, das Eluieren der Fraktion von Gesättigten aus der entasphaltenisierten Probe in der zweiten Trennsäule durch Einstellen der Umschaltventile umfasst, um einen Fließweg des Lösungsmittel zu erstellen, der die erste Trennsäule umgeht,
Durchführen eines Entfernungsverfahrens für eine Fraktion einer Klasse von aromatischen Ringen, das Überführen mindestens einer Fraktion einer Klasse von aromatischen Ringen, die in der entasphaltenisierten Probe enthalten ist, von der zweiten Trennsäule zu der dritten Trennsäule und Eluieren der der mindestens einen Fraktion einer Klasse von aromatischen Ringen aus der dritten Trennsäule durch Einstellen der Umschaltventile, um eine Fließweg des Lösungsmittels zu erstellen, der die erste und die zweite Trennsäule umgeht, anschließend
Durchführen eines Entfernungsverfahrens für eine Fraktion von Sulfiden in der dritten Trennsäule, das Rückspülen der dritten Trennsäule umfasst, um die Fraktion von Sulfiden zu extrahieren, durch Einstellen der Umschaltventile, um eine Fließweg des Lösungsmittels zu erstellen, der die erste und die zweite Trennsäule umgeht, anschließend
Durchführen eines Entfernungsverfahrens für eine Fraktion von Polaren in der zweiten Trennsäule, das Rückspülen der zweiten Trennsäule umfasst, um die Fraktion von Polaren zu extrahieren, durch Einstellen der Umschaltventile, um einen Fließweg des Lösungsmittels zu erstellen, der die erste und die dritte Trennsäule umgeht, und anschließend
Durchführen eines Asphaltenentfernungsverfahrens in der ersten Trennsäule, um die ausgefällten Asphaltene aus der ersten Trennsäule zu eluieren, durch Einstellen der Umschaltventile, um einen Fließweg desLösungsmittels zu erstellen, der die zweite und die dritte Trennsäule umgeht,
wobei das Verfahren ferner Zuführen der extrahierten Fraktion von Gesättigten, der Fraktion einer Klasse von aromatischen Ringen, der Fraktion von Sulfiden, der Fraktion von Polaren und der Fraktion von Asphaltenen zu einem Detektor umfasst.

2. Verfahren nach Anspruch 1, bei dem das Durchführen eines Asphaltenausfällungsverfahrens Führen eines ersten Lösungsmittels durch die erste Trennsäule umfasst, um Asphaltene aus der Probe in der ersten Trennsäule auszufällen, wobei das erste Lösungsmittel vorzugsweise Heptan enthält.

3. Verfahren nach einem der vorhergehenden Ansprüche, bei dem das Durchführen eines Entfernungsverfahrens für eine Fraktion von Gesättigen Eluieren der Fraktion von Gesättigten aus der Probe in der zweiten Trennsäule das Verwenden eines zweiten Lösungsmittels umfasst, wobei das zweite Lösungsmittel vorzugsweise Heptan enthält.

4. Verfahren nach Anspruch 3, bei dem Zuführen der extrahierten Fraktion von Gesättigten Führen der extrahierten Fraktion von Gesättigten durch die dritte Trennsäule umfasst, bevor sie in den Detektor eintritt.

5. Verfahren nach einem der vorhergehenden Ansprüche, bei dem das Durchführen eines Entfernungsverfahrens für eine Fraktion einer Klasse von aromatischen Ringen umfasst:
Überführen der Fraktion einer Fraktion von aromatischen Ringen einer Klasse-1, die in der Probe enthalten ist, aus der zweiten Trennsäule zu der dritten Trennsäule unter Verwendung eines zweiten Lösungsmittels, und
Extrahieren der Fraktion von aromatischen Ringen der Klasse-1 aus der dritten Trennsäule unter Verwendung eines dritten Lösungsmittels.

6. Verfahren nach Anspruch 5, bei den das Durchführen des Entfernungsverfahrens für eine Fraktion einer Klasse von aromatischen Ringen ferner Führen der extrahierten Fraktion von aromatischen Ringen der Klasse-1 zu einem Detektor umfasst und/oder bei dem die Zusammensetzung des dritten Lösungsmittels mit der Zeit variiert, wobei das dritte Lösungsmittel anfangs eine Mischung von Heptan, Methylenchlorid und Toluol enthält.

7. Verfahren nach Anspruch 5, bei dem das Durchführen eines Entfernungsverfahrens für eine Fraktion einer Klasse von aromatischen Ringen ferner umfasst:
Überführen der Fraktion einer Fraktion von aromatischen Ringen einer Klasse-2, die in der Probe enthalten ist, aus der zweiten Trennsäule zu der dritten Trennsäule unter Verwendung eines vierten Lösungsmittels, wobei die Zusammensetzung des vierten Lösungsmittels vorzugsweise mit der Zeit variiert, und
Extrahieren der Fraktion von aromatischen Ringen der Klasse-2 aus der dritten Trennsäule unter Verwendung eines fünften Lösungsmittels, wobei die Zusammensetzung des fünften Lösungsmittels vorzugsweise mit der Zeit variiert und anfangs eine Mischung von Methylenchlorid und Toluol enthält,
bevorzugter Führen der extrahierten Fraktion von aromatischen Ringen der Klasse-2 zu einem Detektor.

8. Verfahren nach Anspruch 7, bei dem das Durchführen eines Entfernungsverfahrens für eine Fraktion einer Klasse von aromatischen Ringen ferner umfasst:
Überführen der Fraktion einer Fraktion von aromatischen Ringen einer Klasse-3, die in der Probe enthalten ist, aus der zweiten Trennsäule zu der dritten Trennsäule unter Verwendung eines sechsten Lösungsmittels, und
Extrahieren der Fraktion von aromatischen Ringen der Klasse-3 aus der dritten Trennsäule unter Verwendung eines siebten Lösungsmittels, wobei die Zusammensetzung des siebten Lösungsmittels vorzugsweise mit der Zeit variiert und anfangs eine Mischung von Methylenchlorid und Toluol enthält,
bevorzugter ferner Führen der extrahierten Fraktion von aromatischen Ringen der Klasse-3 zu einem Detektor.

9. Verfahren nach Anspruch 8, bei dem das Durchführen eines Entfernungsverfahrens für eine Fraktion einer Klasse von aromatischen Ringen ferner umfasst:
Überführen der Fraktion einer Fraktion von aromatischen Ringen einer Klasse-4+, die in der Probe enthalten ist, aus der zweiten Trennsäule zu der dritten Trennsäule unter Verwendung eines achten Lösungsmittels, und
Extrahieren der Fraktion von aromatischen Ringen der Klasse-4+ aus der dritten Trennsäule unter Verwendung eines neunten Lösungsmittels,
bevorzugter ferner Führen der extrahierten Fraktion von aromatischen Ringen der Klasse-4+ zu einem Detektor.

10. Verfahren nach einem der vorhergehenden Ansprüche, bei dem das Rückspülen der dritten Trennsäule Rückspülen der dritten Trennsäule unter Verwendung eines Lösungsmittels einschließt, das eine Mischung von Methylenchlorid, Methanol und Toluol enthält.

11. Verfahren nach einem der vorhergehenden Ansprüche, bei dem das Rückspülen der zweiten Trennsäule Rückspülen der zweiten Trennsäule unter Verwendung eins Lösungsmittel einschließt, das anfangs eine Mischung von Methylenchlorid, Methanol und Toluol enthält.

12. Trennsystem (100) zum Durchführen von quantitativen Fraktionierung einer Gesamtvakuumrückstandsprobe, das umfasst:
eine erste Trennsäule (10), wobei die erste Trennsäule eine Aspahltendeterminator-Säule ist,
eine zweite Trennsäule (20), wobei die zweite Trennsäule eine DNAP-Säule ist, die 2,4-Dinitroanilinpropyl-Siliciumdioxidgel enthält,
eine dritte Trennsäule (30), wobei die dritte Trennsäule Silberion-beladenes-starkes-Kationen-Austausch-Siliciumdioxidgel (Ag⁺SCX⁻) enthält,
eine Lösungsmittelabgabeeinheit (1) zum Zuführen von Trennungslösungsmittel zu mindestens einer von der ersten Trennsäule (10), der zweiten Trennsäule (20) und der dritten Trennsäule (30), und
eine Vielzahl von Umschaltventilen (51-54), die die erste Trennsäule (10), die zweite Trennsäule (20), die dritte Trennsäule (30) und die Lösungsmittelabgabeeinheit (1) miteinander verbinden und einen Fließweg dazwischen erstellen, wobei der selektive Betrieb der Vielzahl von Umschaltventilen (51-54) den Fließweg zwischen der ersten Trennsäule (10), der zweiten Trennsäule (20) und der dritten Trennsäule (30) modifiziert,
wobei in einem erstes Betriebsmodus das Trennsystem konfiguriert ist, eine Gesamtvakuumrückstandsprobe in acht Fraktionen zu trennen, wobei jeder der Säulen (10), (20) und (30) selektiv betrieben wird, um die Gesamtvakuumrückstandsprobe in die acht Fraktionen zu trennen, und wobei ein Asphaltenausfällungsverfahren in der ersten Trennsäule (10) durchgeführt wird, um Asphaltene aus der Gesamtvakuumrückstandsprobe auszufällen, ein Entfernungsverfahren für eine Fraktion von Gesättigten in der zweiten Trennsäule (20) und der dritten Trennsäule (30) durchgeführt wird, um eine Fraktion von Gesättigten aus der Probe zu extrahieren, ein Entfernungsverfahren für eine Fraktion einer Klasse von aromatischen Ringen in der zweiten Trennsäule (20) und der dritten Trennsäule (30) durchgeführt wird, um mindestens eine Fraktion einer Klasse von aromatischen Ringen aus der Probe zu extrahieren, ein Entfernungsverfahren für eine Fraktion von Sulfiden in der dritten Trennsäule (30) durchgeführt wird, um eine Fraktion von Sulfiden aus der Probe zu extrahieren, ein Entfernungsverfahren für eine Fraktion von Polaren in der zweiten Trennsäule (20) durchgeführt wird, um eine Fraktion von Polaren aus der Probe zu extrahieren, und ein Asphaltenentfernungsverfahren in der ersten Trennsäule (10) durchgeführt wird, um die ausgefällten Asphaltene aus der Probe zu extrahieren,
wobei in einem zweiten Betriebsmodus das Trennsystem konfiguriert ist, um eine entasphaltenisierte, schwere Kohlenwasserstoffprobe in sieben Fraktionen zu trennen, wobei jede der von zweiten Trennsäule (20) und der dritten Trennsäule (30) selektiv betrieben wird, um die Kohlenwasserstoffprobe in die sieben Fraktionen zu trennen, und die erste Trennsäule (10) umgangen wird, wobei ein Entfernungsverfahren für eine Fraktion von Gesättigten in der zweiten Trennsäule (20) und der dritten Trennsäule (30) durchgeführt wird, um eine Fraktion von Gesättigten aus der Probe zu extrahieren, ein Entfernungsverfahren für eine Fraktion einer Klasse von aromatischen Ringen in der zweiten Trennsäule (20) und der dritten Trennsäule (30) durchgeführt wird, um mindestens eine Fraktion einer Klasse von aromatischen Ringen aus der Probe zu extrahieren, ein Entfernungsverfahren für eine Fraktion von Sulfiden in der dritten Trennsäule (30) durchgeführt wird, um eine Fraktion von Sulfiden aus der Probe zu extrahieren, und ein Entfernungsverfahren für eine Fraktion von Polaren in der zweiten Trennsäule (20) durchgeführt wird, um eine Fraktion von Polaren aus der Probe zu extrahieren,
wobei in einem dritten Betriebsmodus das Trennsystem konfiguriert ist, um eine Rückstandsprobe in Asphaltene und entasphaltenisiertes Öl zu trennen, wobei die erste Trennsäule (10) betrieben wird und die zweite Trennsäule (20) und die dritte Trennsäule (30) umgangen werden, und
wobei das System ferner einen Detektor (40) zum Detektieren der Asphaltene und von Fraktionen umfasst, die in jedem der ersten, zweiten und dritten Betriebsmodi abgetrennten Fraktionen, und
wobei das Trennsystem (100) zwischen den drei Betriebsmodi umgeschaltet werden kann, bezogen auf den Betrieb der Umschaltventile (51-54), und wobei die Umschaltventile (51-54) bereitgestellt werden, um den Fluss von Lösungsmittel und Proben durch die ersten, zweiten und dritten Säulen (10), (20), (30) zu kontrollieren, um die Proben in Fraktionen zu trennen, und
wobei ein erstes Umschaltventil (51) betreibbar mit der zweiten Trennsäue (20), der dritten Trennsäule (30) und einem zweiten Umschaltventil (52) verbunden ist, das zweite Umschaltventil (52) betreibbar mit der zweiten Trennsäue (20), der dritten Trennsäule (30), dem ersten Umschaltventil (51), einem dritten Umschaltventil (53) und einem vierten Umschaltventil (54) verbunden ist, das dritte Umschaltventil (53) betreibbar mit dem zweiten Umschaltventil (52), dem vierten Umschaltventil (54), der ersten Trennsäule (10) und dem Detektor (40) verbunden ist, das vierte Umschaltventil (40) betreibbar mit der Abgabeeinheit (1), der ersten Trennsäule (10), dem zweiten Umschaltventil (52) und dem dritten Umschaltventil (53) verbunden ist.

13. Trennsystem nach Anspruch 12, bei dem im dem ersten Betriebsmodus jeder von der ersten Trennsäule, der zweiten Trennsäule und der dritten Trennsäule selektive betrieben wird, um die Gesamtvakuumrückstandsprobe in acht Fraktionen zu trennen, die Asphaltene, eine Fraktion von Gesättigten, mindestens eine Fraktion einer Klasse von aromatischen Ringen, eine Fraktion von Sulfiden und eine Fraktion von Polaren einschließen.

## Revendications

1. Procédé de réalisation d'un fractionnement quantitatif d'un échantillon de résidu sous vide total, l'échantillon de résidu sous vide total contenant des asphaltènes, une fraction de composés saturés, au moins une fraction de classe de noyaux aromatiques, une fraction de sulfures et une fraction de composés polaires, comprenant :
l'obtention d'un échantillon de résidu sous vide total ;
l'introduction de l'échantillon de résidu sous vide total dans un système de séparation ayant une première colonne de séparation, une deuxième colonne de séparation, une troisième colonne de séparation, une unité de distribution de solvant et une pluralité de vannes de commutation interconnectant la première colonne de séparation, la deuxième colonne de séparation, la troisième colonne de séparation et l'unité de distribution de solvant, établissant une voie d'écoulement entre elles, un fonctionnement sélectif de la pluralité de vannes de commutation modifiant la voie d'écoulement entre la première colonne de séparation, la deuxième colonne de séparation et la troisième colonne de séparation, facilitant ainsi la séparation de l'échantillon de résidu sous vide total en fractions, la première colonne de séparation étant une colonne de détermination d'asphaltènes, la deuxième colonne de séparation étant une colonne de DNAP contenant du gel de 2,4-dinitroanilino-propyl-silice et la troisième colonne de séparation contenant un gel de silice à échange de cations forts chargé en ions argent (Ag⁺SCX⁻) ;
la réalisation d'un procédé de précipitation d'asphaltènes dans la première colonne de séparation pour précipiter des asphaltènes à partir de l'échantillon de résidu sous vide total et le transfert d'un échantillon désasphalté jusqu'à la deuxième colonne de séparation ;
la réalisation d'un procédé de retrait de fraction de composés saturés comprenant l'élution de la fraction de composés saturés à partir de l'échantillon désasphalté dans la deuxième colonne de séparation par réglage des vannes de commutation pour établir une voie d'écoulement du solvant qui contourne la première colonne de séparation ;
la réalisation d'un procédé de retrait de fraction de classe de noyaux aromatiques comprenant le transfert d'au moins une fraction de classe de noyaux aromatiques contenue dans l'échantillon désasphalté de la deuxième colonne de séparation à la troisième colonne de séparation ; et l'élution de l'au moins une fraction de classe de noyaux aromatiques à partir de la troisième colonne de séparation par réglage des vannes de commutation pour établir une voie d'écoulement du solvant qui contourne la première et la deuxième colonne de séparation ; puis
la réalisation d'un procédé de retrait de fraction de sulfures dans la troisième colonne de séparation comprenant le rinçage en circulation inverse de la troisième colonne de séparation pour extraire la fraction de sulfures par réglage des vannes de commutation pour établir une voie d'écoulement du solvant qui contourne la première et la deuxième colonne de séparation ; puis
la réalisation d'un procédé de retrait de fraction de composés polaires dans la deuxième colonne de séparation comprenant le rinçage en circulation inverse de la deuxième colonne de séparation pour extraire la fraction de composés polaires par réglage des vannes de commutation pour établir une voie d'écoulement du solvant qui contourne la première et la troisième colonne de séparation ; et ensuite
la réalisation d'un procédé de retrait d'asphaltènes dans la première colonne de séparation pour éluer les asphaltènes précipités à partir de la première colonne de séparation en réglant les vannes de commutation pour établir une voie d'écoulement du solvant qui contourne la deuxième et la troisième colonne de séparation,
le procédé comportant en outre la fourniture de la fraction de composés saturés, de la fraction de classe de noyaux aromatiques, de la fraction de sulfures, de la fraction de composés polaires et de la fraction d'asphaltènes extraites à un détecteur.

2. Procédé selon la revendication 1, dans lequel la réalisation d'un procédé de précipitation d'asphaltènes comporte le passage d'un premier solvant à travers la première colonne de séparation pour précipiter des asphaltènes à partir de l'échantillon dans la première colonne de séparation, de préférence dans lequel le premier solvant contient de l'heptane.

3. Procédé selon l'une quelconque des revendications précédentes, dans lequel la réalisation d'un procédé de retrait de fraction de composés saturés comporte l'élution de la fraction de composés saturés à partir de l'échantillon dans la deuxième colonne de séparation au moyen d'un deuxième solvant, le deuxième solvant contenant de préférence de l'heptane.

4. Procédé selon la revendication 3, dans lequel la fourniture de la fraction de composés saturés extraite au détecteur comporte le passage de la fraction de composés saturés extraite à travers la troisième colonne de séparation avant qu'elle pénètre dans le détecteur.

5. Procédé selon l'une quelconque des revendications précédentes, dans lequel la réalisation d'un procédé de retrait de fraction de classe de noyaux aromatiques comprenant :
le transfert d'une fraction de classe de noyaux aromatiques 1 contenue dans l'échantillon de la deuxième colonne de séparation à la troisième colonne de séparation au moyen d'un deuxième solvant ; et
l'extraction de la fraction de classe de noyaux aromatiques 1 à partir de la troisième colonne de séparation au moyen d'un troisième solvant.

6. Procédé selon la revendication 5, dans lequel la réalisation d'un procédé de retrait de fraction de classe de noyaux aromatiques comporte en outre la fourniture de la fraction de classe de noyaux aromatiques 1 extraite à un détecteur et/ou dans lequel la composition du troisième solvant varie dans le temps, le troisième solvant contenant au départ un mélange d'heptane, de chlorure de méthylène et de toluène.

7. Procédé selon la revendication 5, dans lequel la réalisation d'un procédé de retrait de fraction de classe de noyaux aromatiques comprend en outre :
le transfert d'une fraction de classe de noyaux aromatiques 2 contenue dans l'échantillon de la deuxième colonne de séparation à la troisième colonne de séparation au moyen d'un quatrième solvant, la composition du quatrième solvant variant de préférence dans le temps ; et
l'extraction de la fraction de classe de noyaux aromatiques 2 à partir de la troisième colonne de séparation au moyen d'un cinquième solvant, la composition du cinquième solvant variant de préférence dans le temps et contenant au départ un mélange de chlorure de méthylène et de toluène,
mieux encore la fourniture de la fraction de classe de noyaux aromatiques 2 extraite à un détecteur.

8. Procédé selon la revendication 7, dans lequel la réalisation d'un procédé de retrait de fraction de classe de noyaux aromatiques comprend en outre :
le transfert d'une fraction de classe de noyaux aromatiques 3 contenue dans l'échantillon de la deuxième colonne de séparation à la troisième colonne de séparation au moyen d'un sixième solvant ; et
l'extraction de la fraction de classe de noyaux aromatiques 3 à partir de la troisième colonne de séparation au moyen d'un septième solvant, la composition du septième solvant variant de préférence dans le temps et contenant au départ un mélange de chlorure de méthylène et de toluène,
mieux encore comporte en outre la fourniture de la fraction de classe de noyaux aromatiques 3 extraite à un détecteur.

9. Procédé selon la revendication 8, dans lequel la réalisation d'un procédé de retrait de fraction de classe de noyaux aromatiques comprend en outre :
le transfert d'une fraction de classe de noyaux aromatiques 4+ contenue dans l'échantillon de la deuxième colonne de séparation à la troisième colonne de séparation au moyen d'un huitième solvant ; et
l'extraction de la fraction de classe de noyaux aromatiques 4+ à partir de la troisième colonne de séparation au moyen d'un neuvième solvant
mieux encore comporte en outre la fourniture de la fraction de classe de noyaux aromatiques 4+ extraite à un détecteur.

10. Procédé selon l'une quelconque des revendications précédentes, dans lequel le rinçage en circulation inverse de la troisième colonne de séparation comporte le rinçage en circulation inverse de la troisième colonne de séparation au moyen d'un solvant qui contient un mélange de chlorure de méthylène, de méthanol et de toluène.

11. Procédé selon l'une quelconque des revendications précédentes, dans lequel le rinçage en circulation inverse de la deuxième colonne de séparation comporte le rinçage en circulation inverse de la deuxième colonne de séparation au moyen d'un solvant qui contient au départ un mélange de chlorure de méthylène, de méthanol et de toluène.

12. Système de séparation (100) destiné à réaliser un fractionnement quantitatif d'un échantillon de résidu sous vide total, comprenant :
une première colonne de séparation (10), la première colonne de séparation étant une colonne de détermination d'asphaltènes ;
une deuxième colonne de séparation (20), la deuxième colonne de séparation étant une colonne de DNAP contenant du gel de 2,4-dinitroanilino-propyl-silice ;
une troisième colonne de séparation (30), la troisième colonne de séparation contenant un gel de silice à échange de cations forts chargé en ions argent (Ag⁺SCX⁻) ;
une unité de distribution de solvant (1) pour fournir un solvant de séparation à au moins une colonne parmi la première colonne de séparation (10), la deuxième colonne de séparation (20) et la troisième colonne de séparation (30) ;
une pluralité de vannes de commutation (51-54) interconnectant la première colonne de séparation (10), la deuxième colonne de séparation (20), la troisième colonne de séparation (30) et l'unité de distribution de solvant (1), établissant une voie d'écoulement entre elles, le fonctionnement sélectif de la pluralité de vannes de commutation (51-54) modifiant la voie d'écoulement entre la première colonne de séparation (10), la deuxième colonne de séparation (20) et la troisième colonne de séparation (30),
dans lequel, dans un premier mode de fonctionnement, le système de séparation est configuré pour séparer un échantillon de résidu sous vide total en huit fractions, dans lequel les colonnes (10), (20) et (30) sont chacune sélectivement utilisées pour séparer l'échantillon de résidu sous vide total en les huit fractions, et dans lequel un procédé de précipitation d'asphaltènes est réalisé dans la première colonne de séparation (10) pour précipiter des asphaltènes à partir de l'échantillon de résidu sous vide total, un procédé de retrait de fraction de composés saturés est réalisé dans la deuxième colonne de séparation (20) et la troisième colonne de séparation (30) pour extraire une fraction de composés saturés de l'échantillon, un procédé de retrait de fraction de classe de noyaux aromatiques est réalisé dans la deuxième colonne de séparation (20) et la troisième colonne de séparation (30) pour extraire au moins une fraction de classe de noyaux aromatiques de l'échantillon, un procédé de retrait de fraction de sulfures est réalisé dans la troisième colonne de séparation (30) pour extraire une fraction de sulfures de l'échantillon, un procédé de retrait de fraction de composés polaires est réalisé dans les deuxièmes colonnes de séparation (20) pour extraire une fraction de composés polaires de l'échantillon et un procédé de retrait d'asphaltènes est réalisé dans la première colonne de séparation (10) pour extraire les asphaltènes précipités de l'échantillon,
dans lequel, dans un deuxième mode de fonctionnement, le système de séparation est configuré pour séparer un échantillon d'hydrocarbures lourds désasphalté en sept fractions, dans lequel la deuxième colonne de séparation (20) et la troisième colonne de séparation (30) sont chacune sélectivement utilisées pour séparer l'échantillon d'hydrocarbures en les sept fractions et la première colonne de séparation (10) est contournée, dans lequel un procédé de retrait de fraction de composés saturés est réalisé dans la deuxième colonne de séparation (20) et la troisième colonne de séparation (30) pour extraire une fraction de composés saturés de l'échantillon, un procédé de retrait de fraction de classe de noyaux aromatiques est réalisé dans la deuxième colonne de séparation (20) et la troisième colonne de séparation (30) pour extraire une fraction de classe de noyaux aromatiques de l'échantillon, un procédé de retrait de fraction de sulfures est réalisé dans la troisième colonne de séparation (30) pour extraire une fraction de sulfures de l'échantillon, et un procédé de retrait de fraction de composés polaires est réalisé dans la deuxième colonne de séparation (20) pour extraire une fraction de composés polaires de l'échantillon,
dans lequel, dans un troisième mode de fonctionnement, le système de séparation est configuré pour séparer un échantillon de résidu en asphaltènes et huile désasphaltée, dans lequel la première colonne de séparation (10) est utilisée et la deuxième colonne de séparation (20) et la troisième colonne de séparation (30) sont contournées, et
dans lequel le système comprend en outre un détecteur (40) pour détecter les asphaltènes et fractions séparés dans chacun des premier, deuxième et troisième modes de fonctionnement et
dans lequel le système de séparation (100) peut être commuté entre les trois modes de fonctionnement sur la base du fonctionnement des vannes de commutation (51-54) et dans lequel les vannes de commutation (51-54) sont prévues pour contrôler l'écoulement de solvant et d'échantillons à travers les première, deuxième et troisième colonnes (10), (20), (30) pour séparer les échantillons en fractions, et
dans lequel une première vanne de commutation (51) est fonctionnellement raccordée à la deuxième colonne de séparation (20), la troisième colonne de séparation (30) et une deuxième vanne de commutation (52) ; la deuxième vanne de commutation (52) est fonctionnellement raccordée à la deuxième colonne de séparation (20), la troisième colonne de séparation (30), la première vanne de commutation (51), une troisième vanne de commutation (53) et une quatrième vanne de commutation (54) ; la troisième vanne de commutation (53) est fonctionnellement raccordée à la deuxième vanne de commutation (52), la quatrième vanne de commutation (54), la première colonne de séparation (10), et au détecteur (40) ; la quatrième vanne de commutation (54) est fonctionnement raccordée à l'unité de distribution (1), la première colonne de séparation (10), la deuxième vanne de commutation (52) et la troisième vanne de commutation (53).

13. Système de séparation selon la revendication 12 dans lequel, dans le premier mode de fonctionnement, la première colonne de séparation, la deuxième colonne de séparation et la troisième colonne de séparation sont chacune sélectivement utilisées pour séparer l'échantillon de résidu sous vide total en huit fractions comportant des asphaltènes, une fraction de composés saturés, au moins une fraction de classe de noyaux aromatiques, une fraction de sulfures, et une fraction de composés polaires.
